# EUROPEAN PATENT APPLICATION

(11) **EP 4 319 311 A1**
(43) Date of publication of application: **07.02.2024**
(21) Application number: 22189101.3
(22) Date of filing: 05.08.2022
(51) Int. Cl.: H04W 36/36, H04W 36/00, H04W 36/08

(54) **USER EQUIPMENT AND BASE STATIONS INVOLVED IN A CELL MOBILITY PROCEDURE**

(71) Applicant: Panasonic Intellectual Property Corporation of America, Torrance, CA 90504 (US)
(72) Inventor: TEO, Tiong Hou, 63225 Langen (DE); SUZUKI, Hidetoshi, Osaka, 571-8501 (JP); LATHEEF, Fasil, 63225 Langen (DE)
(74) Representative: Grünecker Patent- und Rechtsanwälte PartG mbB

(57) **Abstract**

The present disclosure relates to a user equipment, UE, comprising the following. A receiver receives, from a source base station, plural cell configurations. Each cell configuration comprises cell configuration parameters for performing a conditional cell mobility procedure with a respective candidate target cell and comprises an execution condition as to when to execute the conditional cell mobility procedure. The plural cell configurations comprise a first subset of cell configurations to be evaluated by the UE when in connection with the source base station. The plural cell configurations comprise a second subset of cell configurations to be evaluated by the UE when in connection with a first candidate target cell of the plurality of candidate target cells, the first candidate target cell being different from a source cell of the source base station. A circuitry of the UE evaluates the execution conditions of only the first subset of cell configurations.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing procedures for a UE to perform improved cell mobility procedures.

In an embodiment, the techniques disclosed here feature a user equipment, UE, comprising the following. A receiver of the UE receives, from a source base station, a plurality of cell configurations for a plurality of candidate target cells. Each cell configuration comprises cell configuration parameters for performing a conditional cell mobility procedure with a respective candidate target cell and comprises an execution condition as to when to execute the conditional cell mobility procedure with said respective candidate target cell. The plurality of cell configurations comprises a first subset of cell configurations to be evaluated by the UE when being in connection with the source base station. The plurality of cell configurations comprises a second subset of cell configurations to be evaluated by the UE when being in connection with a first candidate target cell of the plurality of candidate target cells, the first candidate target cell being different from a source cell of the source base station. A circuitry of the UE evaluates the execution conditions of only the first subset of cell configurations. The circuitry, when the evaluated execution condition of a cell configuration among the first subset of cell configurations is fulfilled for the first candidate target cell, executes the conditional cell mobility procedure with the first candidate target cell, based on the cell configuration parameters of the first candidate target cell.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates an overview of different cell types in Dual Connectivity,
- **Fig. 7**: is a signaling diagram for a handover involving a UE, a source gNB and a target gNB,
- **Fig. 8**: illustrates an exemplary conditional handover involving a UE, a source gNB and a target gNB,
- **Fig. 9 and Fig. 10**: respectively illustrate other exemplary conditional handovers,
- **Fig. 11**: is a signaling diagram for a conditional PSCell change procedure,
- **Fig. 12**: is a signaling diagram for a conditional PSCell addition procedure,
- **Fig. 13**: illustrates an exemplary and simplified structure of a UE and a gNB,
- **Fig. 14**: illustrates a structure of the UE according to an exemplary implementation of the improved mobility procedure of the first solution,
- **Fig. 15**: illustrates a flow diagram for the UE behavior according to an exemplary implementation of the improved mobility procedure of the first solution,
- **Fig. 16**: illustrates a structure of the source base station according to an exemplary implementation of the improved mobility procedure of the first solution,
- **Fig. 17**: illustrates a flow diagram for the source base station behavior according to an exemplary implementation of the improved mobility procedure of the first solution,
- **Fig. 18**: illustrates a structure of the target base station according to an exemplary implementation of the improved mobility procedure of the first and second solutions,
- **Fig. 19**: illustrates a flow diagram for the target base station behavior according to an exemplary implementation of the improved mobility procedure of the first and second solutions,
- **Fig. 20**: is a signaling diagram illustrating an exemplary exchange between the UE, the source gNB and the target gNB for an exemplary implementation of the improved mobility procedure, particularly improved CHO procedure, of the first solution,
- **Fig. 21**: is a signaling diagram illustrating an exemplary exchange between the UE, the source gNB and the target gNB for preparation of CHO configurations and CHO pre-configurations according to the improved CHO procedure of the first solution,
- **Fig. 22**: illustrates a signaling diagram illustrating an exemplary exchange between the UE, the source gNB and the target gNB for an exemplary implementation of the improved CPC procedure of the first solution,
- Fig. 23: illustrates a signaling diagram illustrating an exemplary exchange between the UE, the source gNB and the target gNB for an exemplary implementation of the improved CPA procedure of the first solution,
- **Fig. 24**: illustrates a structure of the UE according to an exemplary implementation of the improved mobility procedure of the second solution,
- Fig. 25: illustrates a flow diagram for the UE behavior according to an exemplary implementation of the improved mobility procedure of the second solution,
- **Fig. 26**: illustrates a structure of the source base station according to an exemplary implementation of the improved mobility procedure of the second solution,
- **Fig. 27**: illustrates a flow diagram for the source base station behavior according to an exemplary implementation of the improved mobility procedure of the second solution, and
- **Fig. 28**: illustrates a signaling diagram illustrating an exemplary exchange between the UE, the source gNB and the target gNB for an exemplary implementation of the improved CPA procedure of the second solution.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

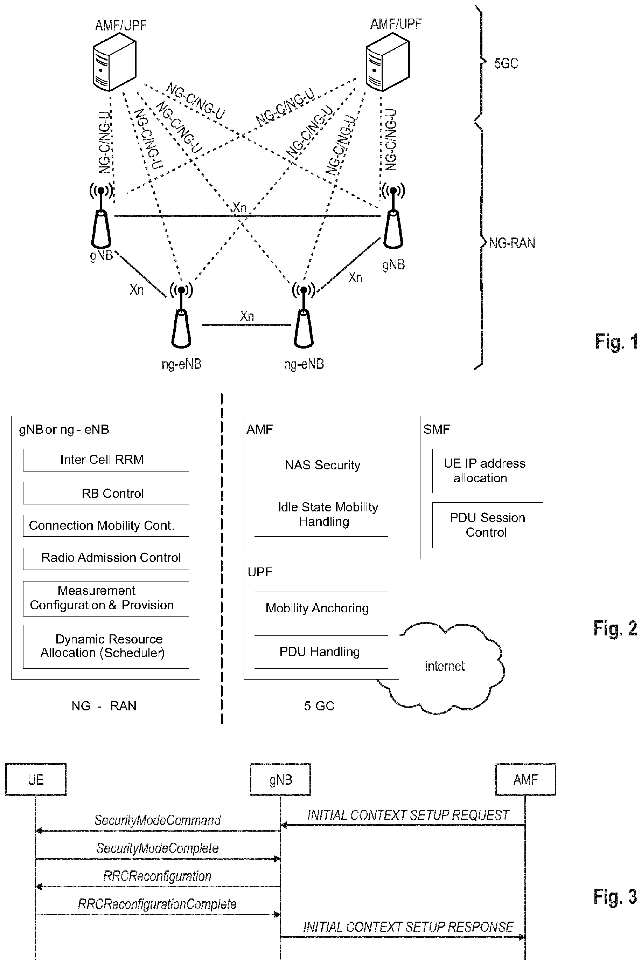

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v16.8.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.1.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

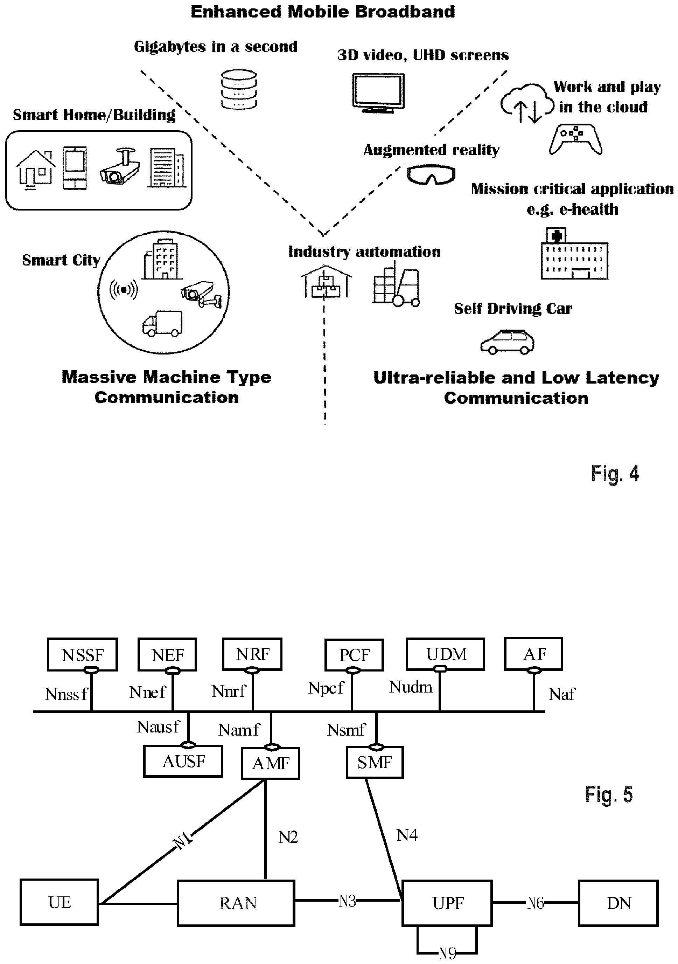

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0 or v17.4.0, section 4.2.3). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Cell types in 5G NR

There are several types of cells in 5G NR, including PCell, SCell, PSCell, SpCell.

The PCell is the primary cell, which can be used to initiate the initial access.

The SCell is a secondary cell. A UE can be configured with one or more SCell in connected mode. An SCell can be activated or deactivated, e.g., according to traffic.

PSCell is closely connected to Dual Connectivity (DC). E-UTRAN supports Dual Connectivity (DC) operation whereby a multiple-Rx/Tx UE in RRC_CONNECTED can be configured to utilize radio resources provided by two distinct schedulers, located in two nodes (Master Node, Secondary Node) connected via a non-ideal backhaul over the X2 interface. The Master Node provides the control plane connection to the core network. The Secondary Node will not have a control plane connection to the core network, but will provide additional resources to the UE in case of MR-DC.

In Dual Connectivity, there are two groups of cells, a master cell group (MCG) and a secondary cell group (SCG). In the MCG, there can be one PCell and one or more SCell. In the SCG, there can be one PSCell and one or more SCell. The UE performs the initial access under the SCG via the PSCell. Because most signaling messages are sent only on the PCell and the PSCell, 3GPP also defines the concept of a SpCell (Special cell) for ease of description, which is to be understood as SpCell = PCell + PSCell.

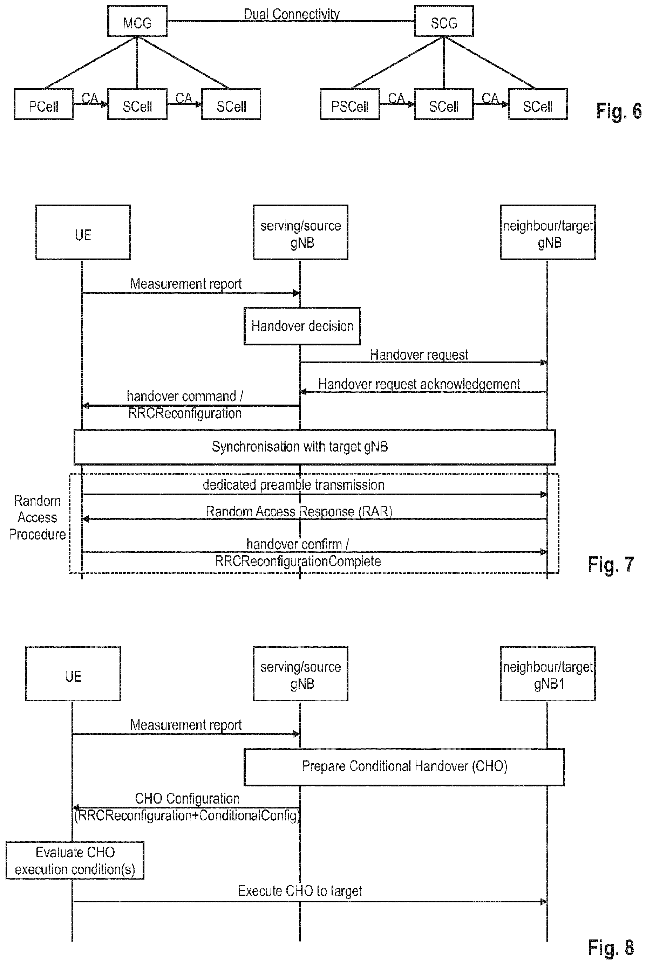

Fig. 6 illustrates an overview of different cell types in Dual Connectivity.

Moreover, there can be a Multi-Radio Dual Connectivity (MR-DC). With MR-DC, the Master RAN Node functions as the controlling entity, utilizing a Secondary RAN for additional data capacity. Example MR-DC configurations include EN-DC (E-UTRA - NR Dual Connectivity), NR-DC (New Radio Dual Connectivity), NGEN-DC (NG-RAN - E-UTRA Dual Connectivity) and NE-DC (NR - E-UTRA Dual Connectivity).

TS 37.340 v17.1.0 defines the Multi-Radio Dual Connectivity in section 4. As presented in section 4.5 of TS 38.300 v17.1.0, Conditional PSCell Addition (CPA) and Conditional PSCell change (CPC) are defined in TS 37.340, and will be explained further below.

### Handover procedure

A typical and simplified handover is illustrated in Fig. 7 and explained briefly in the following. A handover of a UE involves that a source base station makes the decision whether to hand over the UE from a source/serving gNB to a neighbour/target gNB (target radio cell). The decision is typically made by a source gNB, e.g., based on measurement results from the UE. The measurement results may be carried in one or more measurement reports, e.g., in the measurement report as illustrated in Fig. 7. Measurement reports are transmitted by the UE to assist the source cell with the handover procedure.

The handover is then prepared (preparation phase) between the two involved base stations, that is a source base station (herein may be interchangeably used with source gNB, source cell) and a target base station (herein may be interchangeably used with target gNB, target cell). The source gNB may transmit a handover request message to the target base station, which in turn may respond with a Handover request acknowledgement message so as to implement the preparation phase. Such a preparation phase allows a neighbour cell to decide whether it has the capacity to accept a further UE (e.g., acknowledging the handover) and reserving resources for the UE to be handed over.

Then, in the execution phase, the UE is instructed through a handover command message (e.g., a RRCReconfiguration message) to switch from the source cell to the target cell, which for example involves reconfiguration of the UE's radio resources so as to establish a connection with the target base station of the target radio cell. The UE accordingly performs the reconfiguration and attaches to the new target base station, which comprises a synchronization and performing a (e.g., contention-free) random access procedure. For instance, the synchronization may comprise that the UE acquires the synchronization signals (e.g., Primary Synchronization Signal, PSS, and Secondary Synchronization Signal, SSS) typically used to obtain the cell identity and frame timing of the target cell, thereby achieving time and frequency synchronization. The random access procedure is performed by the UE, e.g., in order to acquire the timing advance value and to obtain uplink resources for uplink transmission with the RAR message. For instance, it consists at least in transmitting the RACH preamble (e.g., a dedicated preamble, in line with what the preamble indicated in the handover command message for a contention-free RACH), the reception of the Random Access Response message (e.g., including an uplink grant), and finally as the third and last step of the random access procedure, the UE confirms that is has completed the reconfiguration and access to the target cell by transmitting a handover confirm message (RRCReconfigurationComplete message) to the target gNB.

An exemplary implementation of such a handover procedure is defined for 5G NR for RRC Connected mobility in the 3GPP Technical Standard TS 38.300 v17.1.0, section 9.2.3.2.

The handover command message may include information of the target cell, such as the target cell ID and configuration information to be able to connect the target cell, as well as handover-accept and handover-reject conditions.

As an exemplarily and simplified overview, the RRCReconfiguration message may contain one or more of:
- Target cell ID
- New C-RNTI
- Target gNB security algorithm identifiers for the selected security algorithms
- Dedicated RACH resources
- Common RACH resources
- Association between RACH resources and SSB(s)
- System information of the target cell

According to a more detailed exemplary definition of the possible content of the handover command message, 5G NR defines the *RRCReconfiguration* message of 3GPP TS 38.331 v17.1.0, section 6.2.2. According to 5G, the RRCReconfiguration message is the command to modify an RRC connection. It may convey information for measurement configuration, mobility control, radio resource configuration (including RBs (radio bearer), MAC (Medium Access Control) main configuration and physical channel configuration) and AS (Access Stratum) security configuration.

### Conditional Handover - CHO

In the legacy handover procedure presented above, the gNB is in charge of making the decision whether the handover should be performed or not. This handover procedure is a reactive process and prone to resulting in handover failures. For instance, it can happen that when the radio link becomes degraded and the mobile terminal needs to send measurement reports, the measurement reports never reach the network. Or, even if they do, the network tries to respond with a handover command that may never reach the mobile terminal, either because the downlink-is degraded and/or the handover command is so large that it requires multiple transmissions.

One important mobility enhancement specified by 3GPP in Rel-16, named *"Conditional Handover* (CHO)", focuses on reducing the number of failure occurrences while a user is moving, for example, when a handover between cells fails or when a connection fails even before a handover (HO) is triggered. CHO thus improves mobility robustness for the handover. Furthermore, it allows reducing signaling and reducing the handover delay. CHO can be used to change the PCell, either for a UE without Dual Connectivity or for a master cell group for a UE with Dual Connectivity. In DC (Dual Connectivity) a PCell change procedure can be performed to change the PCell of a Master Cell Group.

Because of the usefulness, CHO has been considered for many areas where cellular communication is applied, including e.g., Mobile Broadband (MBB), in Non-Terrestrial Networks (NTN), in Integrated Access Backhaul, and NR-Unlicensed.

In a conditional handover, the mobile terminal receives from the source gNB a handover command, (which is e.g., a RRCReconfiguration message which contains conditional configuration information prepared by a target candidate cell). When received, the mobile terminal stores the configuration of the handover command, instead of applying it immediately as in the legacy handover. Together with the handover command, the mobile terminal also receives an associated condition to be monitored by the mobile terminal. The mobile terminal only applies the stored command when the condition is satisfied. Then, the mobile terminal executes the handover and connects to the target node as in a normal handover.

In one example, the source gNB can be responsible for preparing the conditional handover, including the execution conditions as to when the UE shall execute (i.e., trigger) the CHO. On the other hand, the candidate target gNB(s) provide the CHO configuration parameters to be forwarded by the source gNB to the mobile terminal.

An exemplary and basic CHO procedure is illustrated by the signaling diagram of **Fig. 8**. As apparent, the source gNB prepares the CHO with the target gNB. The target gNB provides the corresponding target-cell-specific configuration parameters to the source gNB. The source gNB sends a CHO command to the UE comprising the target cell configuration and execution conditions for the target cell. Upon reception of the CHO command, the UE does not detach from the source gNB (unlike in the legacy handover), but instead the UE continues exchanging UL and DL data with the source gNB, until the CHO execution condition is met. Once the execution condition for the target cell is fulfilled, the UE initiates the CHO execution (e.g., in the same or similar manner as in the legacy handover).

According to one example, the configuration parameters of the target gNB, can include one or more of the following:
- radio resource configuration of the candidate target cell, such as resource blocks, physical channel configuration,
- security configuration of the candidate target cell,
- dual connectivity information, such as master cell group information, secondary cell group information,
- measurement configuration of the candidate target cell,
- mobility information (including e.g., handover configuration and the conditional configuration.

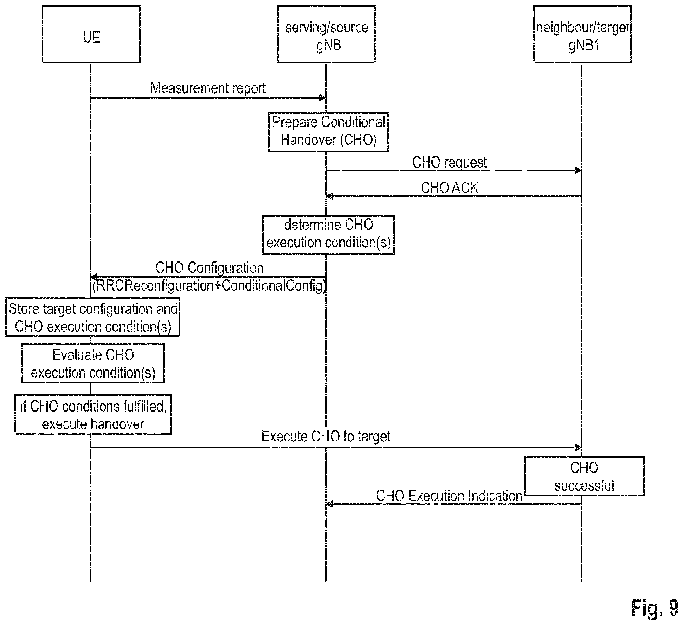

Another exemplary and simplified CHO procedure is illustrated by the signaling diagram of Fig. 9, with more details compared to the basic signaling diagram of Fig. 8. As apparent therefrom, the source gNB prepares the CHO, e.g., based on measurements received from the mobile terminal. The source gNB thus identifies gNB1 as a potential target of the CHO and transmits a handover request (here, CHO request) (e.g., in 5G, the corresponding CHO-related IE in the handover request message is the IE Conditional Handover Information Request, e.g., according to TS 38.423 v17.1.0) to the target gNB. The target gNB processes the received handover request (e.g., performs admission control) and, assuming the target gNB allows access of the mobile terminal to its cell, the target gNB sends a suitable CHO response message (CHO ACK) to the source gNB. As one example, the shared CHO configuration can include one or more of a requested Target Cell ID and a Maximum number of CHO preparations (see TS 38.423 v17.1.0, section 9.1.1.2). Generally, the CHO ACK message may include the necessary configuration information for accessing the target cell (e.g., in the form of a Handover Request Acknowledge message, e.g., XnAp, Xn application protocol, signaling message according to 3GPP standard TS 38.423).

In this example implementation, it is assumed that the source gNB, upon receiving the CHO ACK from the target cell, determines suitable CHO execution condition(s).

The source gNB then sends a CHO configuration to the mobile terminal, including for instance the configuration information for accessing the target cell (as received by the source gNB from the target gNB) and the determined CHO execution conditions, both of which are stored by the mobile terminal. Consequently, the mobile terminal is thus provided with the necessary information to be able to perform the conditional handover. For example, the UE may store the CHO information in a memory.

Accordingly, the mobile terminal does not immediately execute the handover, but rather first maintains the connection to the source gNB and starts evaluating the CHO execution conditions for the target cell.

When the CHO execution condition is eventually satisfied, the UE executes the handover to the target cell, which for instance involves that the UE detaches from the source gNB, applies the stored configuration corresponding to the target cell, synchronizes to the target cell and completes the handover (e.g., by sending an RRCReconfigurationComplete message to the target gNB). The target cell can inform the source gNB that the UE has successfully accessed the target cell, see CHO Execution Indication message of Fig. 9. One exemplary implementation is another XnAp message, such as Handover Success signaling message of 3GPP TS 38.423.

There are several options on how to implement the condition(s) for the CHO. It is assumed that a condition defines criteria as when to apply the stored handover command, wherein the criteria is e.g., based on the quality of the serving cell(s) and neighbor cells (somewhat similar to the condition that leads the mobile terminal to transmit a measurement report when the condition is fulfilled). However, rather than triggering a transmission of a measurement report, the UE triggers the CHO towards the target cell.

For example, the network can configure the wireless terminal to execute the CHO when a neighbor cell becomes an offset better than the serving cell (e.g., similar to Event A3), or when the serving cell becomes worse than 1^{st} threshold and neighbour cell becomes between than 2^{nd} threshold (e.g., similar to Event A5). The measurements for determining the cell quality can be based e.g., on measurements such as Radio Signal Received Power, RSRP, and quality represented by Radio Signal Received Quality, RSRQ, and Signal to Interference and Nose Ratio, SINR). It is also possible to configure two (or more) (sub-)conditions for the mobile terminal and associate these plural (sub-)conditions with the stored command - i.e., the command is applied only if all (sub-)conditions are fulfilled.

As a further exemplary implementation of the CHO, if a UE is configured with CHO configuration and before the CHO execution condition is satisfied another (legacy) HO Command is received from the gNB, then, the UE will execute the handover based on the (legacy) HO Command received and will not wait for any of the CHO Conditions to be fulfilled. In brief, the legacy handover takes precedence over the CHO.

According to one exemplary implementation, the illustrated CHO configuration contains both the configuration of the CHO candidate cell(s) (generated by the candidate gNB(s)) and the respective execution condition(s) (generated by the source gNB). For example, a configuration of a CHO candidate cell may include e.g., a candidate cell list with corresponding cell IDs, and carrier frequencies for the candidate cells. The execution conditions can include CHO-related trigger events, such as the above mentioned A3/A5 events, and trigger quantities (e.g., RSRP and RSRQ, RSRP and SINR, etc.).

An exemplary 5G-compliant implementation of a Conditional Handover will be briefly explained in the following, with more details being available from the 3GPP technical standards, including e.g., TS 38.331 v17.1.0, 38.300 v17.1.0 and 38.423 v17.1.0.

TS 38.331 defines the RRCReconfiguration procedure and messages, used as part of the CHO, and the corresponding UE behaviour e.g., in sections 5.3.5, 5.3.5.1, 5.3.5.2, 5.3.5.3, 5.3.5.4. The Condition Reconfiguration is defined in section 5.3.5.13 of TS 38.331, used by the network to configure a UE with one or more candidate SpCells. The network provides the configuration parameters for the target SpCell in the *ConditionalReconfiguration* IE, as part of the *RRCReconfiguration* IE. The *ConditionalReconfiguration* IE provides the configuration of the candidate target SpCells and execution condition(s) for conditional handover, conditional PSCell additional (CPA, see later discussion), and conditional PSCell change (CPC, see later discussion).

### ConditionalReconfiguration

The IE *ConditionalReconfiguration* is used to add, modify and release the configuration of conditional reconfiguration.

### ConditionalReconfiguration information element

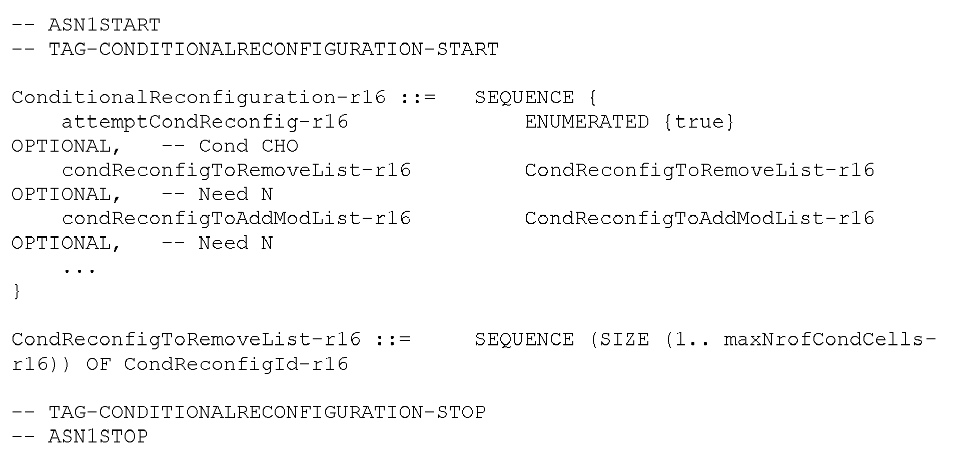

| ***ConditionalReconfiguration* field descriptions** |
|---|
| ***attemptCondReconfig*** |
| If present, the UE shall perform conditional reconfiguration if selected cell is a target candidate cell and it is the first cell selection after failure as described in clause 5.3.7.3. |
| ***condReconfigToAddModList*** |
| List of the configuration of candidate SpCells to be added or modified for CHO, CPA or CPC. |
| ***condReconfigToRemoveList*** |
| List of the configuration of candidate SpCells to be removed. |

| **Conditional Presence** | **Explanation** |
|---|---|
| *CHO* | The field is optional present, Need R, if the UE is configured with at least a candidate SpCell for CHO. Otherwise the field is not present. |

### CondReconfig ToAddModList

The IE CondReconfigToAddModList concerns a list of conditional reconfigurations to add or modify, with for each entry the condReconfigld and the associated condExecutionCond/condExecutionCondSCG and condRRCReconfig.

### CondReconfigToAddModList information element

```
 -- ASN1START
 -- TAG-CONDRECONFIGTOADDMODLIST-START
 CondReconfigToAddModList-r16 ::= SEQUENCE (SIZE (1.. maxNrofCondCells-r16)) OF
 CondReconfigToAddMod-r16
 CondReconfigToAddMod-r16 ::= SEQUENCE {
     condReconfigId-r16 CondReconfigId-r16,
     condExecutionCond-r16 SEQUENCE (SIZE (1..2)) OF MeasId
     OPTIONAL, -- Need M
     condRRCReconfig-r16 OCTET STRING (CONTAINING
     RRCReconfiguration) OPTIONAL, -- Cond condReconfigAdd
     ..., [ [
     condExecutionCondSCG-r17 OCTET STRING (CONTAINING
     CondReconfigExecCondSCG-r17) OPTIONAL -- Need M
     ] ]
 }
 CondReconfigExecCondSCG-r17 ::= SEQUENCE (SIZE (1..2)) OF MeasId
 -- TAG-CONDRECONFIGTOADDMODLIST-STOP
 -- ASN1STOP
```

| ***CondReconfigToAddMod* field descriptions** |
|---|
| ***condExecutionCond*** |
| The execution condition that needs to be fulfilled in order to trigger the execution of a conditional reconfiguration for CHO, CPA, intra-SN CPC without MN involvement or MN initiated inter-SN CPC. When configuring 2 triggering events (Meas Ids) for a candidate cell, network ensures that both refer to the same *measObject.* For CHO, if network configures *condEventD1* or *condEventT1* for a candidate cell network configures a second triggering event *condEventA3, condEventA4* or *condEventA5* for the same candidate cell. Network does not configure both *condEventD1* and *condEventT1* for the same candidate cell. |
| ***condExecutionCondSCG*** |
| Contains execution condition that needs to be fulfilled in order to trigger the execution of a conditional reconfiguration for SN initiated inter-SN CPC. The Meas Ids refer to the *measConfig* associated with the SCG. When configuring 2 triggering events (Meas Ids) for a candidate cell, network ensures that both refer to the same *measObject.* For each *condReconfigurationld,* the network always configures either *condExecutionCond* or *condExecutionCondSCG* (not both). |
| ***condRRCReconfig*** |
| The *RRCReconfiguration* message to be applied when the condition(s) are fulfilled. The *RRCReconfiguration* message contained in *condRRCReconfig* cannot contain the field *conditionalReconfiguration* or the field *daps-Config.* For CPA and for CPC, the *RRCReconfiguration* message contained in *condRRCReconfig* cannot contain the field *scg-State.* |

| **Conditional Presence** | **Explanation** |
|---|---|
| *condReconfigAdd* | The field is mandatory present when a *condReconfigId* is being added. Otherwise the field is optional, need M. |

### CondReconfigId

The IE *CondReconfigId* is used to identify a CHO, CPA or CPC configuration.

### CondReconfigld information element

```
-- ASN1START
 -- TAG-CONDRECONFIGID-START
 CondReconfigId-r16 ::= INTEGER (1.. maxNrofCondCells-r16)
 -- TAG-CONDRECONFIGID-STOP
 -- ASN1STOP
```

Moreover, TS 38.331 defines the *ReportConfigNR* IE in section 6.3.2, which specifies criteria for triggering a CHO, CPA or CPC event.

TS 38.300 defines the Conditional Handover in section 9.2.3.4, as a handover that is executed by the UE when one or more handover execution conditions are met. The UE starts evaluating the execution condition(s) upon receiving the CHO configuration, and stops evaluating the execution condition(s) once a handover is executed. Further, an execution condition may consist of one or two trigger condition(s). Only single RS type is supported and at most two different trigger quantities (e.g., RSRP and RSRQ, RSRP and SINR, etc.) can be configured simultaneously for the evaluation of CHO execution condition of a single candidate cell. Section 16.4.3.2.2 explains the CHO applied to Non-Terrestrial Networks.

As one exemplary possibility of the general conditional handover, instead of preparing only one target cell as in the legacy case, multiple candidate target cells can be prepared in advance in the network. This can be advantageous, because due to the delayed handover the specific target cell to be accessed by the mobile terminal is not certain. Correspondingly, the mobile terminal receives various target cell configurations and CHO trigger condition(s) for each target cell configuration to be monitored. When a condition for one of the configured candidate target cells is satisfied, then the mobile terminal executes the handover to that target node based on the already-received target cell configuration.

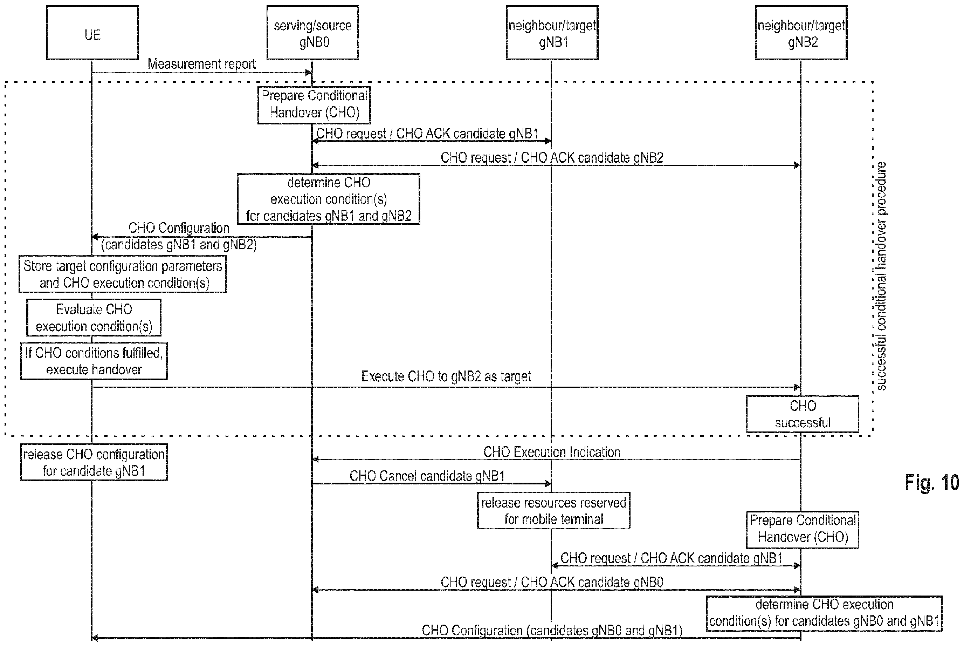

The CHO for the scenario with more than one candidate target cell (here, two candidate target cells of gNB1 and gNB2 respectively) is illustrated in **Fig. 10**, being a signaling diagram similar to the one provided in Fig. 9 for the scenario with only one candidate target cell. The signaling diagram is to a large extent the same as for Fig. 9. One exception is that the CHO preparation is performed for two candidate target cells, controlled by gNB1 and gNB2 respectively. As apparent from Fig. 10, the CHO preparation including the CHO request and the CHO ACK are illustrated in a simplified manner as two-side arrows for the two candidate target cells of gNB1 and gNB2.

The source gNB correspondingly determines the CHO execution condition(s) for each candidate target cell, and provides the CHO configuration and respective CHO execution condition for both candidate target cells to the mobile terminal.

It is furthermore exemplarily assumed that the source gNB transmits both CHO configurations for the two candidate target cells and the respective CHO execution condition(s) for each CHO configuration together to the UE. Alternatively, these may be transmitted to the UE separately for each candidate target cell.

In the scenario of Fig. 10, it is exemplarily assumed that the mobile terminal determines that the CHO execution condition(s) for target gNB2 are fulfilled and thus executes the handover to the target cell of gNB2.

The conditional handover procedure of Fig. 10 includes two further important steps. First, after successful completion of the CHO, the UE releases (e.g., deletes from its storage) all the CHO configurations and CHO execution conditions, including the one for candidate target cell of gNB1 to which the CHO was not triggered. Second, the source gNB, upon receiving the CHO Execution Indication message from target cell gNB2 informs gNB1 that the CHO for the mobile terminal is cancelled. This allows the gNB1 to release any resources that might have been reserved for the potential CHO of the mobile terminal.

### Conditional PSCell Change

3GPP Release 16 also introduces the Conditional PSCell change procedure (CPC), in order to improve the mobility robustness of a change of the PSCell in dual connectivity scenarios.

In DC (Dual Connectivity, e.g., MR-DC) a PSCell change procedure can be performed to change the PSCell of a Secondary Cell Group. In one example, the PSCell may depend on whether a security key change is required.

Similar to the CHO, a Conditional PSCell change (CPC) is executed only when a corresponding CPC execution condition is met.

CPC reuses many functionalities of the conditional handover, discussed above (see 10.1 of TS 37.340 v17.1.0).

The UE completes the CPC execution procedure by an ULInformationTransferMRDC message to the Master Node (MN) (of the MCG), which includes an embedded RRCReconfigurationComplete message to the new PSCell, if SRB3 is not configured; otherwise, the UE sends the RRCReconfigurationComplete message to the new PSCell directly.

An exemplary 5G-compliant implementation is defined by TS 37.340 v17.1.0, which provides details of the CPC in its section 10.6, as follows.

The CPC configuration contains the configuration of CPC candidate PSCell(s) and execution condition(s) and may contain the MCG configuration for inter-SN CPC, to be applied when CPC execution is triggered.

An execution condition may consist of e.g., one or two trigger condition(s) (CondEvents, as defined in TS 38.331 or TS 36.331). Only single RS (Reference Signal) type and at most two different trigger quantities (e.g., RSRP and RSRQ, RSRP and SINR, etc.) can be used for the evaluation of CPC execution condition of a single candidate PSCell.

Before any CPC execution condition is satisfied, upon reception of PSCell change command or PCell change command, the UE executes the PSCell change procedure as described in clause 10.3 and 10.5 or the PCell change procedure as described in clause 9.2.3.2 in TS 38.300 or clause 10.1.2.1 in TS 36.300, regardless of any previously received CPC configuration.

While executing CPC, the UE is not required to continue evaluating the execution condition of other candidate PSCell(s).

Once the CPC procedure is executed successfully, the UE releases all stored conditional reconfigurations (e.g., for CPC and for CHO, as specified in TS 38.300 or TS 36.300).

Upon the release of SCG, the UE also releases the stored CPC configurations.

In Release 16, the CPC procedure was limited to intra-SN change, without MN involvement. 3GPP Release 17 introduced support of the inter-SN Conditional PSCell Change (CPC).

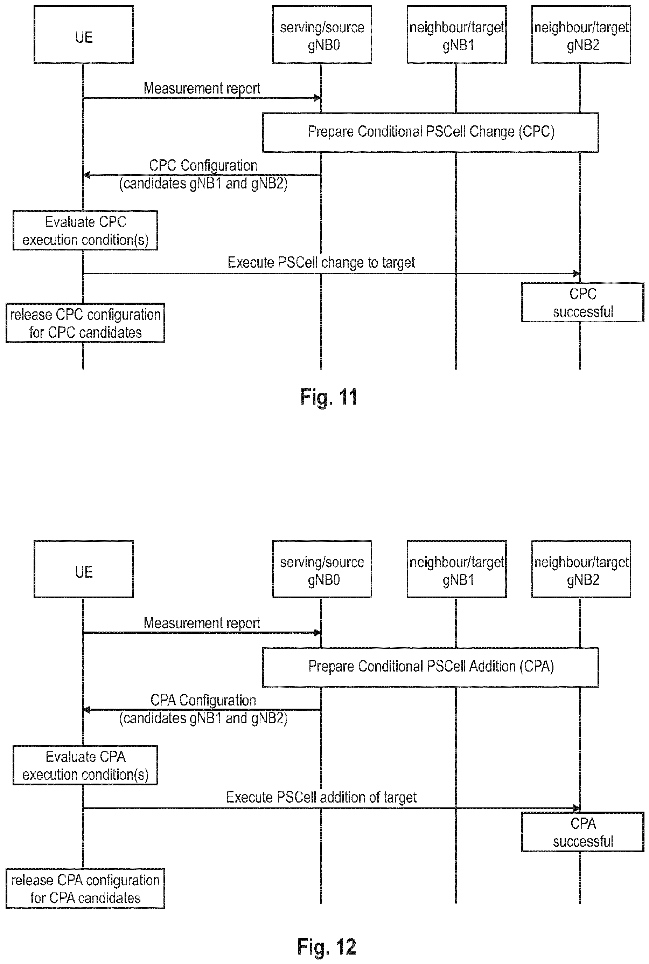

An exemplary and simplified signaling diagram for a CPC procedure is illustrated in Fig. 11. As apparent therefrom, the source gNB prepares the CPC with both candidate target cells of gNB1 and gNB2 respectively. This may e.g., involve the reception at the source gNB of the CPC configuration parameters for gNB1 respectively gNB2, as well as the determination by the source gNB of the CPC execution condition(s) for each of the two CPC candidates. The two CPC configurations (including the CPC configuration parameters and the respective CPC execution conditions) are then transmitted from the source gNB to the UE. The UE does not immediately change the PSCell to one of the two candidate target cells, but evaluates the CPC execution conditions for the two candidates. Eventually, the UE determines that the CPC execution condition for target gNB2 is fulfilled and changes the PSCell to the cell of gNB2. Upon successful completion of the CPC, the UE releases the two CPC configurations, including the one CPC configuration for gNB1 to which the CPC was not executed.

### Conditional PSCell Addition

3GPP also introduces the Conditional PSCell Addition procedure (CPA), in order to improve the mobility robustness when creating a new secondary cell group. According to CPA, a PSCell is added for the secondary cell group in dual connectivity scenarios, and the UE connects to the new PSCell of the SCG in addition to the cells of the MCG. In one example, the additional PSCell can be of another Radio Access Technology than the current one(s). CPA can also be used to add another SCell to the SCG. Furthermore, under dual connectivity, there can be multiple SCGs established for the UE, although only one SCG can be active at a given point in time. Therefore, CPA can also be used to create another SCG with another PSCell, even though this other SCG is in an inactive state at the beginning.

Similar to the CHO, a Conditional PSCell addition (CPA) is defined as a PSCell addition that is executed by the UE only when a corresponding CPA execution condition is met. The UE starts evaluating the execution condition(s) upon receiving the CPA configuration, and stops evaluating the execution condition(s) once PSCell addition or PCell change is triggered.

CPA reuses many functionalities of the conditional handover, discussed above (see 10.1 of TS 37.340 v17.1.0).

In one exemplary implementation, the CPA procedure is used to establish a connection between the UE and an additional PSCell of a newly created SCG, including the configuration parameters for the PSCell.

TS 37.340 v17.1.0 discloses the Conditional PSCell addition in section 10.2.3, as part of the Secondary Node Addition of section 10.2. According to this exemplary 5G-compliant implementation, the CPA configuration contains the configuration of CPA candidate PSCell(s), execution condition(s) and may contain the MCG configuration, to be applied when CPA execution is triggered. An execution condition may consist of one or two trigger condition(s) (CondEvents, as defined in TS 38.331 [4] or TS 36.331 [10]). Only a single RS type and at most two different trigger quantities (e.g., RSRP and RSRQ, RSRP and SINR, etc.) can be used for the evaluation of CPA execution condition of a single candidate PSCell.

Before any CPA execution condition is satisfied, and upon reception of a normal (i.e., non-conditional) PSCell addition command or PCell change command, the UE executes the PSCell addition procedure as described in clause 10.2.1 or 10.2.2, or the PCell change procedure as described in clause 9.2.3.2 in TS 38.300 or clause 10.1.2.1 in TS 36.300, regardless of any previously received CPA configuration. Upon the successful completion of PSCell addition procedure or PCell change procedure, the UE releases the stored CPA configuration.

While executing CPA, the UE is not required to continue evaluating the execution condition of other candidate PSCell(s).

Once the CPA procedure is executed successfully, the UE releases all stored conditional reconfigurations (i.e., for CPA and for CHO, as specified in TS 38.300 or TS 36.300). CPA configuration in HO command, in PSCell addition command, or in conditional configuration (i.e., CPA, CPC or CHO configuration) is not supported.

An exemplary and simplified signaling diagram for a CPA procedure is illustrated in Fig. 12. As apparent therefrom, the source gNB (which can thus be considered a cell of the master cell group) prepares the CPA with both candidate target cells of gNB1 and gNB2 respectively. This may e.g., involve the reception at the source gNB of the CPA configuration parameters for gNB1 respectively gNB2, as well as the determination by the source gNB of the CPA execution condition(s) for each of the two CPA candidates. The two CPA configurations (including the CPA configuration parameters and the respective CPA execution conditions) are then transmitted from the source gNB to the UE. The UE does not immediately add the PSCell of gNB1 or gNB2, but evaluates the CPA execution conditions for the two candidates. Eventually, the UE determines that the CPA execution condition for target gNB2 is fulfilled and creates the SCG with the PSCell of gNB2. Upon successful completion of the CPA, the UE releases the two CPA configurations, including the one CPA configuration for gNB1 to which the CPA was not executed.

### Further Improvements

In the above, the mobility enhancements of CHO, CPC and CPA introduced by 3GPP Release 16 and 17 have been discussed. In Release 18, further enhancements for the NR mobility are envisaged.

The inventors have identified problems in the current definitions of the CHO, CPC, and CPA procedures. In particular, the current Release 16 and 17 NR specifications respectively require the UE to release the CHO / CPC / CPA configurations, upon successful completion of a corresponding procedure.

For instance, as illustrated in Fig. 10, upon successful completion of a CHO, the UE releases all CHO configurations, including the CHO configuration parameters and CHO execution conditions.

As illustrated in Fig. 11, upon successful completion of a CPC, the UE releases all CPC configurations, including the CPC configuration parameters and CPC execution conditions.

As illustrated in Fig. 12, upon successful completion of a CPA, the UE releases all CPA configurations, including the CPA configuration parameters and CPA execution conditions.

As a result, the network and the UE need to perform reconfiguration and reinitialization for CHO / CPC / CPA, in order to be able to perform another subsequent CHO / CPC / CPA, as explained in connection with the above Fig. 10, 11, 12, respectively.

This leads to an increase in signaling overhead. After each successful CHO / CPC / CPA procedure, the UE needs to receive again the complete set of configuration parameters and execution conditions for each candidate cell.

Furthermore, this may lead to an increase in the delay for the CHO / CPC / CPA procedures, because the UE needs to be configured first before being able to execute the CHO / CPC / CPA after a previous successful CHO / CPC / CPA.

The above disadvantages are particularly severe in case of frequent cell changes, e.g., when operating in FR2 (which includes frequency bands from 24.25 GHz to 71.0 GHz).

The inventors have thus identified the possibility of providing improved mobility procedures (such as CHO, CPC, CPA), for allowing to avoid one or more of the above described disadvantages. The present invention relates to different solutions and variants for such improved mobility procedures.

### Embodiments

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The expression "cell configuration" here can be understood as a configuration for a cell usable in the context of performing a cell mobility procedure, such as the CHO, CPC or CPA procedures. In one exemplary implementation, the cell configuration comprises a complete set of parameters for the cell and **"an execution condition",** so as to limit the execution of the cell mobility procedure to the fulfillment of a condition.

The expression **"cell configuration parameters"** can be understood as parameters related to a cell (more precisely a candidate target cell), wherein these parameters can be used for performing the conditional cell mobility procedure with said cell.

The expression **"candidate target cell"** can be understood as referring to a cell which is a candidate target for a conditional cell mobility procedure. There may be one or more candidate target cells, and one of these is likely to eventually become the actual target cell of the conditional cell mobility procedure.

The expression **"conditional cell mobility procedure"** can be understood to cover a mobility procedure relating to a different cell, which execution is not immediate but dependent on the fulfillment of an execution condition. Examples of the conditional cell mobility procedure are the conditional handover (CHO, see e.g., 5G-standardized CHO discussed above), the conditional cell change (CPC, see e.g., 5G-standardized CPC discussed above), or the conditional cell addition (CPA, see e.g., 5G-standardized CPA discussed above).

The term **"release",** e.g., in connection with releasing a configuration, can be e.g., understood as "deleting", e.g., deleting the (stored) configuration.

The term **"maintain",** e.g., in connection with maintaining a configuration, can be e.g., understood as being configured not to release, e.g., not releasing the configuration.

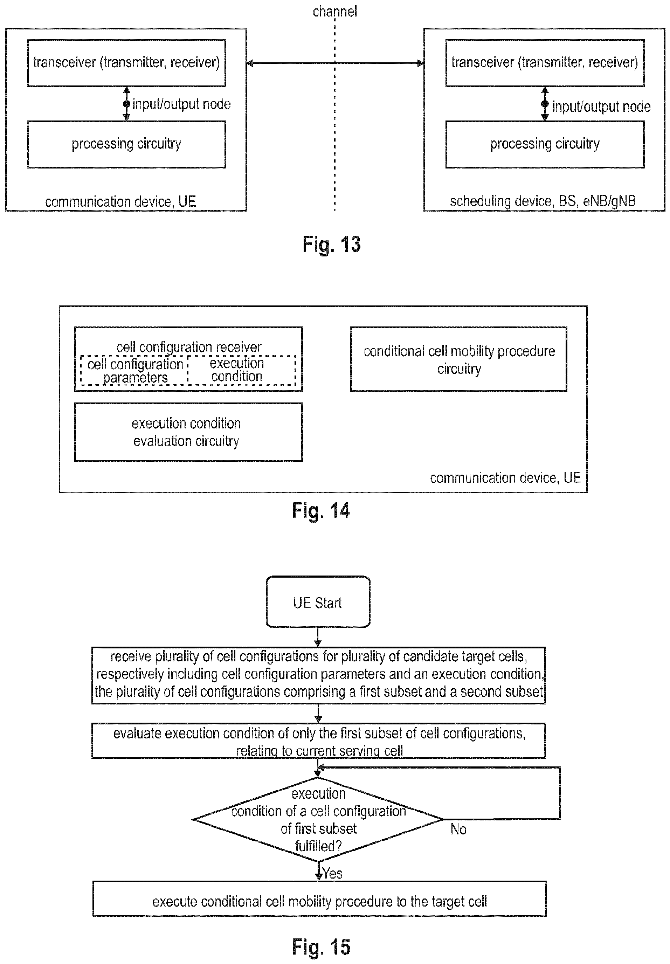

**Fig. 13** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved mobility procedures will be described in the following. In said connection, improved UEs, improved base stations and improved integrated circuits are presented, which participate separately or together in the improved mobility procedures. Corresponding methods for the UE behavior and the base station behavior are provided as well. The integrated circuits correspond to the UE and base station, and respectively their behavior.

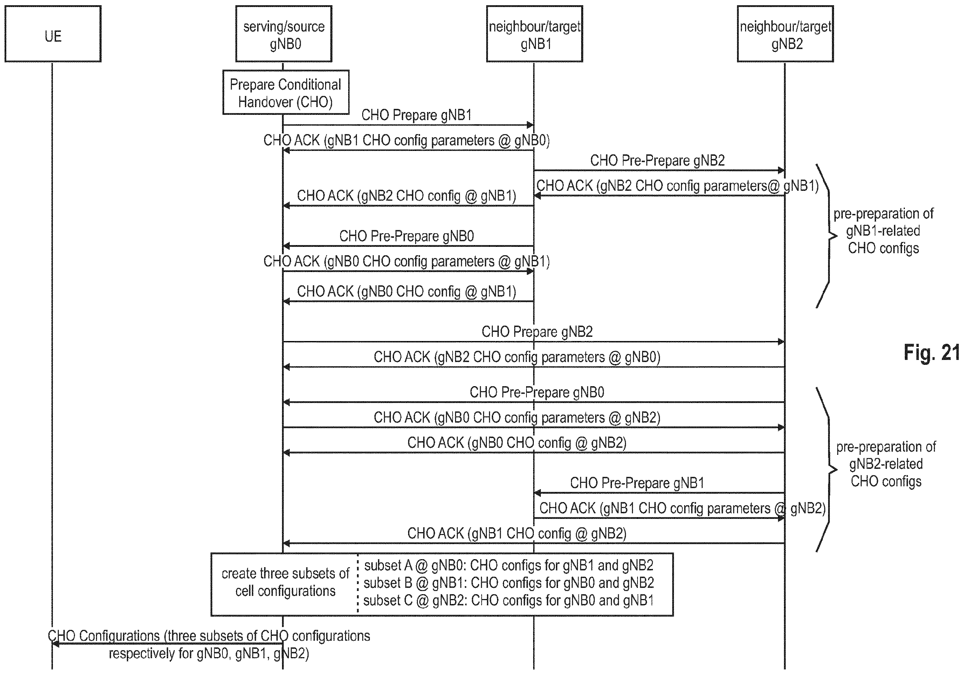

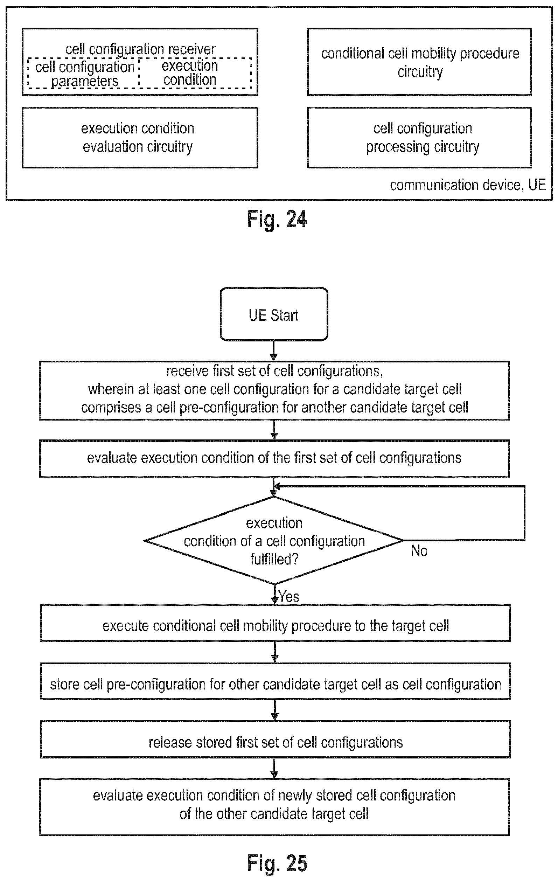

Two solutions will be presented for an improved mobility procedure. The first solution will be discussed with reference to Fig. 14 to 23, and the second solution will be discussed with reference to Fig. 24 to 28 (with a back reference to the explanations of Fig. 21).

### First solution

**Fig. 14** illustrates a simplified and exemplary UE structure according to an exemplary implementation of the improved mobility procedure of the first solution, which can be implemented based on the general UE structure explained in connection with Fig. 13. The various structural elements of the UE illustrated in said Fig. 14 can be interconnected between one another e.g., with corresponding input/output nodes (not shown) e.g., in order to exchange control and user data and other signals. Although not shown for illustration purposes, the UE may include further structural elements.

As apparent from Fig. 14, the UE may include a cell configuration receiver (for receiving a plurality of cell configurations including cell configuration parameters and an execution condition), an execution condition evaluation circuitry, and a conditional cell mobility procedure circuitry.

In the present case, the receiver of the UE can thus be exemplarily configured to at least partly perform one or more of receiving a plurality of cell configurations for a plurality of candidate target cells, and furthermore as will become apparent from the below disclosure, receiving an indication as to which subset to use for the evaluation, etc.

In the present case as will become apparent from the below disclosure, the processing circuitry of the UE can thus be exemplarily configured to at least partly perform one or more of executing the conditional cell mobility procedure when the execution condition is fulfilled, evaluating the execution conditions, maintaining the received plurality of cell configurations, etc.

In the present case as will become apparent from the below disclosure, the transmitter of the UE can thus be exemplarily configured to at least partly perform one or more of transmitting measurement reports to the serving cell of the UE, etc.

One exemplary procedure as will be disclosed in more detail further below is implemented by a UE that includes the following. A receiver of the UE receives, from a source base station, a plurality of cell configurations for a plurality of candidate target cells. Each cell configuration comprises cell configuration parameters for performing a conditional cell mobility procedure with a respective candidate target cell and comprises an execution condition as to when to execute the conditional cell mobility procedure with said respective candidate target cell. The plurality of cell configurations comprises a first subset of cell configurations to be evaluated by the UE when being in connection with the source base station. The plurality of cell configurations comprises a second subset of cell configurations to be evaluated by the UE when being in connection with a first candidate target cell of the plurality of candidate target cells, the first candidate target cell being different from a source cell of the source base station. A circuitry of the UE evaluates the execution conditions of only the first subset of cell configurations. The circuitry, when the evaluated execution condition of a cell configuration among the first subset of cell configurations is fulfilled for the first candidate target cell, executes the conditional cell mobility procedure with the first candidate target cell, based on the cell configuration parameters of the first candidate target cell.

A corresponding exemplary method comprises the following steps performed by a UE:
receiving, from a source base station, a plurality of cell configurations for a plurality of candidate target cells, wherein each cell configuration comprises cell configuration parameters for performing a conditional cell mobility procedure with a respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the source base station, wherein the plurality of cell configurations comprises a second subset of cell configurations to be evaluated by the UE when being in connection with a first candidate target cell of the plurality of candidate target cells, the first candidate target cell being different from a source cell of the source base station,
evaluating the execution conditions of only the first subset of cell configurations,
executing, when the evaluated execution condition of a cell configuration among the first subset of cell configurations is fulfilled for the first candidate target cell, the conditional cell mobility procedure with the first candidate target cell, based on the cell configuration parameters of the first candidate target cell.

A corresponding sequence diagram for an exemplary UE behaviour in line with the above-discussed UE and UE method is illustrated in **Fig. 15**.

The above-described improved mobility procedure thus achieves the object and overcomes some of the drawbacks explained above. For instance, the improved mobility procedure involves that the UE has a plurality of cell configurations, including different subsets for use in different serving cells. Correspondingly, the UE respectively processes just the suitable subset of cell configurations for the current serving cell. Because the various subsets of cell configurations to be used at other cells are already available at the UE before the conditional cell mobility procedure is executed, the improved mobility procedure allows expediting the subsequent conditional cell mobility procedure. Furthermore, signaling overhead with the UE is saved after performing the conditional cell mobility procedure, because the new serving cell needs not transmit the suitable cell configurations to be evaluated by the UE in view of that the corresponding subset of cell configurations is already available at the UE.

Some exemplary implementations of the improved mobility procedure also involve improved base stations, particularly an improved source base station, to which the UE is currently connected (termed e.g., serving base station because the base station serves the UE) and an improved target base station, being the target of the conditional cell mobility procedure. Correspondingly, the improved mobility procedure also provides improved base stations that participate therein, as will be explained in the following.

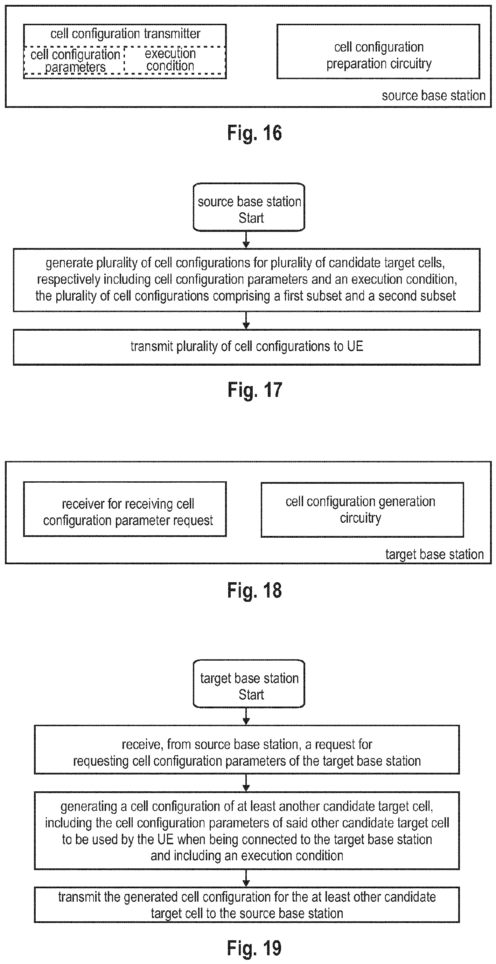

**Fig. 16** illustrates a simplified and exemplary source base station structure according to an exemplary implementation of the improved mobility procedure, which can be implemented based on the general base station structure explained in connection with Fig. 13. The various structural elements of the source base station illustrated in said Fig. 16 can be interconnected between one another e.g., with corresponding input/output nodes (not shown) e.g., in order to exchange control and user data and other signals. Although not shown for illustration purposes, the source base station may include further structural elements.

As apparent therefrom, the source base station comprises an cell configuration transmitter (the initial cell configuration comprising cell configuration parameters and execution condition), cell configuration preparation circuitry.

In the present case as will become apparent from the below disclosure, the receiver of the source base station can thus be exemplarily configured to at least partly perform one or more of receiving requested cell configuration parameters, etc.

In the present case as will become apparent from the below disclosure, the processing circuitry of the source base station can thus be exemplarily configured to at least partly perform one or more of generating a plurality of cell configurations, and determining, for each candidate target cell, cell configuration parameters, etc.

In the present case as will become apparent from the below disclosure, the transmitter of the source base station can thus be exemplarily configured to at least partly perform one or more of transmitting cell configurations to a UE, transmitting a request to candidate target cells for requesting cell configuration parameters, etc.

One exemplary procedure as will be disclosed in more detail further below is implemented by a source base station that includes the following. Circuitry of the source base station generates a plurality of cell configurations for a plurality of candidate target cells. Each cell configuration comprises cell configuration parameters for performing a conditional cell mobility procedure between a user equipment, UE, and said respective candidate target cell and comprises an execution condition as to when to execute the conditional cell mobility procedure with said respective candidate target cell. The plurality of cell configurations comprises a first subset of cell configurations to be evaluated by the UE when being in connection with the base station. The plurality of cell configurations comprises a second subset of cell configurations to be evaluated by the UE when being in connection with a first candidate target cell of the plurality of candidate target cells, the first candidate target cell being different from a source cell of the base station. A transmitter transmits the generated plurality of cell configurations to the UE.

A corresponding method comprises the following steps performed by the source base station:
- receiving, from a source base station, a request for requesting cell configuration parameters of the base station for performing a conditional cell mobility procedure between a user equipment, UE, connected to the source base station, and the base station,
- generating, in response to receiving the request, a cell configuration of at least another candidate target cell, wherein the cell configuration of the other candidate target cell includes the cell configuration parameters of said other candidate target cell to be used by the UE when being in connection with the base station, and including the execution condition as to when to execute the conditional cell mobility between the UE, when being in connection with the base station, and said other candidate target cell,
- transmitting the generated cell configuration for the at least other candidate target cell to the source base station.

A corresponding sequence diagram for an exemplary source base station behavior in line with the above-discussed source base station and corresponding method is illustrated in Fig. 17. The sequence diagram illustrates an exemplary and simplified implementation of the above presented source base station method.

Fig. 18 illustrates a simplified and exemplary target base station structure according to an exemplary implementation of the improved mobility procedure, which can be implemented based on the general base station structure explained in connection with Fig. 13. The various structural elements of the target base station illustrated in said Fig. 18 can be interconnected between one another e.g., with corresponding input/output nodes (not shown) e.g., in order to exchange control and user data and other signals. Although not shown for illustration purposes, the target base station may include further structural elements.

As apparent therefrom, the target base station comprises a receiver for receiving cell configuration parameter requests and a cell configuration generation circuitry.

In the present case as will become apparent from the below disclosure, the receiver of the target base station can thus be exemplarily configured to at least partly perform one or more of receiving a request from another base station for requesting cell configuration parameters, and receiving cell configuration parameters, etc.

In the present case as will become apparent from the below disclosure, the processing circuitry of the target base station can thus be exemplarily configured to at least partly perform one or more of performing the conditional cell mobility procedure, generating cell configurations, etc.

In the present case as will become apparent from the below disclosure, the transmitter of the target base station can thus be exemplarily configured to at least partly perform one or more of transmitting the generated cell configurations, etc.

One exemplary procedure as will be disclosed in more detail further below is implemented by a target base station that includes the following. A receiver of the target base station receives, from a source base station, a request for requesting cell configuration parameters of the base station for performing a conditional cell mobility procedure between a user equipment, UE, connected to the source base station, and the base station. Circuitry of the target base station, in response to receiving the request, generates a cell configuration of at least another candidate target cell. The cell configuration of the other candidate target cell includes the cell configuration parameters of said other candidate target cell to be used by the UE when being in connection with the base station, and including the execution condition as to when to execute the conditional cell mobility between the UE, when being in connection with the base station, and said other candidate target cell. A transmitter of the target base station transmits the generated cell configuration for the at least other candidate target cell to the source base station.

A corresponding method comprises the following steps performed by the target base station:
receiving, from a source base station, a request for requesting cell configuration parameters of the base station for performing a conditional cell mobility procedure between a user equipment, UE, connected to the source base station, and the base station,
generating, in response to receiving the request, a cell configuration of at least another candidate target cell, wherein the cell configuration of the other candidate target cell includes the cell configuration parameters of said other candidate target cell to be used by the UE when being in connection with the base station, and including the execution condition as to when to execute the conditional cell mobility between the UE, when being in connection with the base station, and said other candidate target cell,
transmitting the generated cell configuration for the at least other candidate target cell to the source base station.

A corresponding sequence diagram for an exemplary target base station behavior in line with the above-discussed target base station and corresponding method is illustrated in Fig. 19. The sequence diagram illustrates an exemplary and simplified implementation of the above presented target base station method.

As explained above, the improved UE, improved source base station and improved target base station participate in the improved mobility procedure so as to achieve the object, overcome some of the identified problems and achieve advantages.

The improved mobility procedure, during which the above-presented improved apparatus participate, will be explained in the following.

For sake of explanation and illustration, at first, it is exemplarily assumed that the improved mobility procedure is an improved conditional handover procedure (improved CHO procedure). In general, the conditional handover can be understood as being a procedure according to which the UE disconnects from a source cell and connects to one candidate target cell (possibly among many candidates) upon fulfilling a condition. The conditional handover can be used independently of whether the UE is in dual connectivity; consequently, the CHO can be used to change the primary cell of the UE, and can also be used to change the primary cell of the UE where the primary cell is part of a master cell group of the UE in the dual connectivity.

However, this assumption of the CHO as the improved conditional cell mobility procedure should not be understood in that the improved mobility procedure should be limited to just the conditional handover. Rather, the principles underlying the improved mobility procedure are also applicable to other conditional cell mobility procedures, such as a conditional cell change procedure (e.g., see CPC above) and a conditional cell addition procedure (e.g., see CPA above). More detailed explanations with regard to an improved CPC procedure and with regard to an improved CPA procedure will be provided further below.

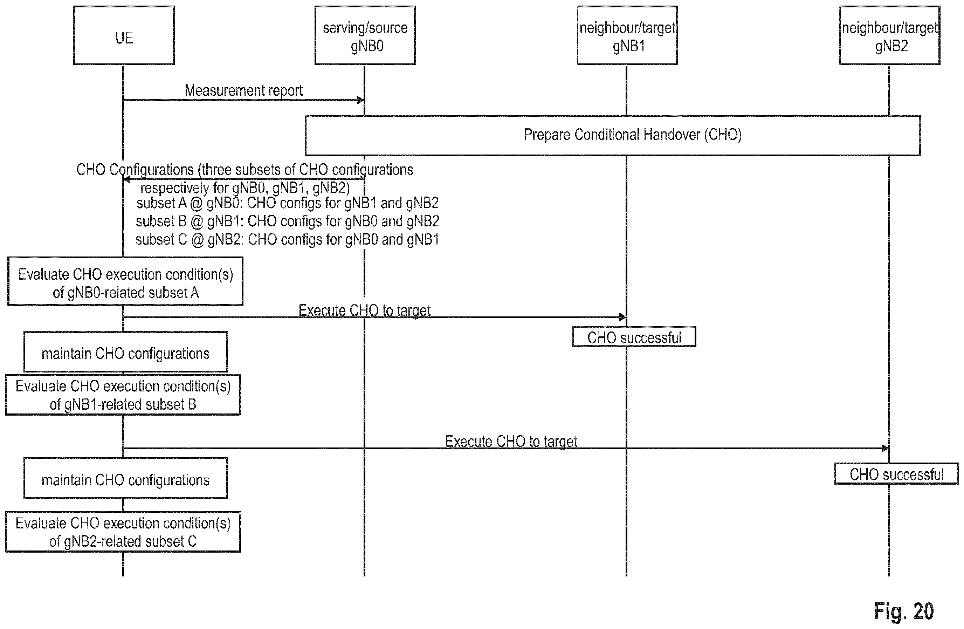

Fig. 20 is a signaling diagram of an exemplary and simplified implementation of the improved CHO procedure, illustrating the exchange of messages between the different participating entities (here the UE, gNB0, gNB1 and gNB2) and the steps performed at these entities.

It is assumed that the UE is currently connected to the source gNB0. According to the improved CHO procedure, the preparation of the CHO by the source gNB is however significantly different from the corresponding CHO preparation in the prior art, e.g., see Fig. 9 and 10. In particular, the CHO preparation involves the preparation of a plurality of CHO configurations for the possible candidate target cells gNB1 and gNB2. The plurality of CHO configurations may thus include CHO configurations that are to be used by the UE when being connected to the source cell gNB0. Furthermore, however, according to the improved CHO procedure, the plurality of CHO configurations may also include CHO configurations that are not to be used by the UE now when being connected to the source cell gNB0, but that are to be used by the UE in the future when being connected to another serving cell (such as gNB1 or gNB2).

In other words, the plurality of CHO configurations includes different subsets of CHO configurations, wherein one subset of CHO configurations is to be used immediately by the UE in connection with the source cell gNB0. However, at least one further subset of CHO configurations among the plurality of cell configurations is pre-prepared for being used later.

For example, the plurality of CHO configurations may include the following in the exemplary scenario of Fig. 20:

| **CHO config #** | **Content of cell config** | **Association with a subset** |
|---|---|---|
| CHO confiq 1 | qNB1 CHO config @ qNB0 | Subset A |
| CHO confiq 2 | qNB2 CHO config @ qNB0 | Subset A |
| CHO confiq 3 | qNB0 CHO config @ qNB1 | Subset B |
| CHO confiq 4 | qNB2 CHO config @ qNB1 | Subset B |

As apparent from the above table, the plurality of CHO configurations includes the CHO configurations 1 and 2 for use when the UE is connected to the gNB0 (named e.g., "@ gNB0). Correspondingly, considering that the UE is currently connected to the source gNB0, the UE will evaluate the CHO configurations 1 and 2 for a potential CHO.

Furthermore, the UE also receives CHO configurations 3 and 4, which are respectively pre-prepared CHO configurations for the future, namely in case the UE performs a successful CHO to gNB1. Correspondingly, the CHO configurations 3 and 4 will not be taken into account by the UE, while being connected to the source cell of gNB0.

The above CHO configurations are logically grouped in different subsets of CHO configurations, wherein subset A is defined as including the gNB0-related CHO configurations (i.e. CHO configurations to be used by the UE when being connected to gNB0). Subset B is defined as including the gNB1-related CHO configurations (i.e. CHO configurations to be used by the UE when being connected to gNB1).

In the above table, the plurality of CHO configurations 1do not include pre-prepared CHO configurations for the case that the UE performs the CHO to the other candidate target cell gNB2. Therefore, in said case, the gNB2 and UE might have to perform prior art procedures to prepare CHO configurations to be used by the UE at the gNB2 (see e.g., prior art discussions above regarding Fig. 8-10).

On the other hand, as another exemplary variant, the CHO preparation by the source gNB0 may also involve the pre-preparation of the CHO configurations for a CHO of the UE being in connection to gNB2. In said case, the plurality of CHO configurations received by the UE may also include the following CHO configurations 5 and 6.

| **CHO config** # | **Content of cell config** | **Association with a subset** |
|---|---|---|
| CHO confiq 5 | qNB0 CHO config @ qNB2 | Subset C |
| CHO confiq 6 | qNB1 CHO config @ qNB2 | Subset C |

The CHO configurations 5 and 6 are defined to be associated with a subset C, which is the subset including all the gNB2-related CHO configurations (i.e. CHO configurations to be used by the UE when being connected to gNB2).

Correspondingly, the plurality of CHO configurations 1-6 thus include one subset for each CHO configuration within one subset. For instance, from the perspective of subset A, for the CHO configuration 1, the plurality of CHO configurations also includes subset B, which relates to the case in which the UE performs the CHO according to said CHO configuration 1. Similarly, from the perspective of subset A, for the CHO configuration 2, the plurality of CHO configurations also includes subset C, which relates to the case in which the UE performs the CHO according to said CHO configuration 2.

Moreover, each of the CHO configurations may include cell configuration parameters for performing the CHO with the respective candidate target cell and furthermore may include an execution condition as to when to execute the CHO procedure with the respective candidate target cell. Therefore, conceptually, the CHO configurations may respectively have the same (or similar) content as compared to CHO configurations used in the prior art.

One exemplary implementation of how the plurality of CHO configurations can be prepared by the source gNB0 will be explained in detail below, particularly in connection with Fig. 21.

The above described plurality of CHO configurations 1-6 thus includes more than one CHO configuration for a respective candidate target cell, in this exemplary scenario two CHO configurations per candidate target cell.

On the other hand, within one subset, the CHO configurations of that subset respectively relate to different candidate target cells. For instance, the CHO configurations 1 and 2 of subset A relate to the different candidate target cells gNB1 and gNB2.

As further apparent from Fig. 20, after the preparation of the plurality of CHO configurations, the source gNB 0 transmit same to the UE . The UE will then proceed to process the CHO configurations to be evaluated by the UE when in connection with its current serving cell, here gNB0. Correspondingly, the UE will evaluate the execution conditions of gNB0-related CHO configurations 1 and 2, to determine whether some execution condition of a CHO configuration is fulfilled.

On the other hand, the UE will not process CHO configurations that do not refer to the current serving cell, i.e. will not process CHO configurations of other subsets among the plurality of CHO configurations, here e.g., of subsets B and C. Therefore, the UE does not spend resources and time on processing CHO configurations for which a CHO is not to be performed.

When the execution condition of one evaluated CHO configuration is fulfilled, the UE proceeds to perform the CHO procedure with the corresponding candidate target cell of the fulfilled CHO configuration. In the exemplary scenario of Fig. 20, it is assumed that the UE performs a CHO procedure with the candidate target gNB1. The CHO procedure can be performed based on the configuration parameters of the corresponding CHO configuration for gNB1.

A further step of the improved CHO procedure involves maintaining the plurality of CHO configurations 1-6, upon the successful completion of the CHO to the gNB1. Consequently, the plurality of CHO configurations are not deleted from UE memory at this point of time. This is in contrast to the legacy CHO procedure (e.g., explained in Fig. 8, 9 or 10), in which the UE releases all the CHO configurations upon the successful CHO.

As a result, the CHO configurations 3 and 4 are immediately available at the UE for being processed upon connecting to the new serving cell gNB1. Therefore, a delay is avoided for performing a subsequent CHO, otherwise caused by the required preparation of new CHO configurations at the new serving cell, gNB1.

CHO configurations 3 and 4 are the gNB1-related CHO configurations of subset B. In a corresponding manner as before, the UE can evaluate the execution conditions of the gNB1-related CHO configurations 3 and 4 to determine whether some execution condition is fulfilled. Again, the UE will not process CHO configurations that do not refer to the current serving cell, here serving cell gNB1.

As apparent from Fig. 20, it is exemplarily assumed that the execution condition for the gNB2 CHO configuration 4 (see above table) is fulfilled, such that the UE performs a CHO procedure with the candidate target gNB2. The CHO procedure can be performed based on the configuration parameters of the corresponding CHO configuration 4 for gNB2.

Similarly, the UE again maintains the plurality of CHO configurations 1-6 upon the successful completion of the CHO to the gNB2. As a result, the CHO configurations 5 and 6 are immediately available at the UE for being processed upon connecting to the new serving cell gNB2.

The improved CHO procedure may then continue in the same manner further. Although not illustrated in Fig. 20, the UE may perform another CHO procedure with the gNB0 or gNB1, etc.

According to one exemplary implementation, the following ASN1 definition defines signaling that can be used by the source gNB0 to inform the UE about the candidates included in a subset, e.g., .gNB1 and gNB2 of subset A.

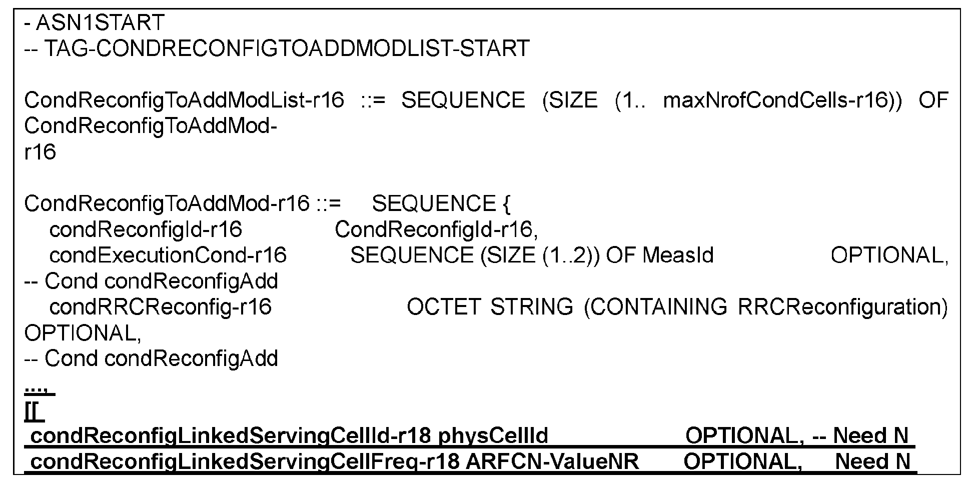

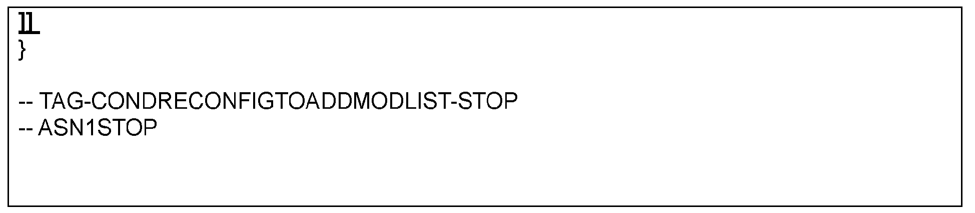

Correspondingly, one candidate target cell can be identified by the Physical Cell ID and the ARFCN value (see bold and underlined text above). Therefore, in order to define a subset of two candidate target cells (e.g., subset A), the source gNB0 could transmit two times the above, respectively including the corresponding Physical Cell ID and the ARFCN identifying the two candidate target cells (e.g., for subset A, gNB1 and gNB2).

In the above explanations of the improved CHO procedure, it was simply assumed that the UE knows which CHO configuration(s) are to be used upon a successful completion of the CHO procedure to a new serving cell. The following exemplary implementations of the improved CHO procedure provides some details on how the UE can determine the suitable CHO configurations to be used. According to a first implementation, the UE determines the suitable CHO configurations based on the current serving cell. Accordingly, each CHO configuration can be associated with a cell for which it shall be used, e.g., the above CHO configurations 1 and 2 are associated with the cell of gNB0, the above CHO configurations 3 and 4 are associated with the cell of gNB1, and the above CHO configurations 5 and 6 are associated with the cell of gNB2. Therefore, the UE, when connecting to a new serving cell, can determine the CHO configuration (s) that are associated with the current serving cell. According to a similar implementation, the UE determines the suitable CHO configurations as those belonging to a subset that is in turn associated with the current serving cell. This first implementation has the advantage that no further signaling is necessary to be exchanged between the base station and the UE for the determination of the suitable CHO configurations.

According to a second implementation, which CHO configurations are to be used by the UE can be controlled by the new serving cell. Correspondingly, the new serving cell can transmit an indication to the UE, indicating which CHO configurations are to be used by the UE. For instance, the indication may identify several CHO configurations separately (e.g., gNB1 would identify CHO configurations 3 and 4) or may commonly identify a subset of CHO configurations by indicating a subset (e.g., gNB1 would identify subset B). The indication may be transmitted by the new serving cell to the UE e.g., during the CHO procedure executed by the UE with the new serving cell. The new serving cell can use a suitable RRC message to carry the indication to the UE.

According to another implementation of the improved CHO procedure, that can be combined with the above or below, a CHO configuration can have a state of activated or deactivated (alternatively, termed active and inactive). Correspondingly, a CHO configuration with an activated state is processed by the UE, while a CHO configuration with a deactivated state is not processed by the UE. Correspondingly, the improved CHO procedure according to this implementation also involves setting the state of the CHO configurations appropriately in line with the above explained underlying concepts. For instance, the UE would set the state of each CHO configuration to either activated or deactivated, depending on whether it is to process said CHO configuration or not. In the above discussed exemplary scenario, the UE, when being in connection with gNB0, would set the state of CHO configurations 1 and 2 to an activated state, while setting the state of CHO configurations 3, 4, 5 and 6 to a deactivated state. Further, the UE, when being in connection with gNB1, would set the state of CHO configurations 3 and 4 to an activated state, while setting the state of CHO configurations 1, 2, 5 and 6 to a deactivated state. The process of setting the state of the CHO configurations can be performed autonomously by the UE based on the current serving cell (see e.g., above first implementation), or based on a suitable indication from the current serving cell (see, e.g., above second implementation).

According to another implementation of the improved CHO procedure, that can be combined with the above or below, a mechanism is introduced for setting the usage of CHO configurations on a cell-specific basis. In particular, the UE receives a cell-status indication from the current serving base station (e.g., source base station gNB0), wherein the cell-status indication indicates one or more candidate cells for which the associated CHO configuration(s) are to be activated or deactivated.

Upon receiving the cell-status indication, the UE can deactivate or activate the CHO configurations relating to said indicated cell.

For example, the cell-status indication may indicate a deactivated cell, in which case the UE deactivates those CHO configurations that relate to that cell. Based on the above discussed exemplary CHO configurations 1-6, and considering the case when the cell-status indication indicates to deactivate the cell of gNB2, the CHO configurations 2 and 4 are deactivated. Therefore, the UE when being in connection with gNB1 will only process the CHO configuration 3 for gNB0, and similarly the UE when being in connection with gNB0 will only process the CHO configuration 1 for gNB1. As a result, a CHO to said deactivated cell gNB2 will no longer be performed by the UE.

For instance, the cell-specific mechanism can be useful in an exemplary scenario where a previously-available candidate target cell is no longer available for being the target of a CHO procedure. In one example, gNB2 is assumed to no longer be available for a target of a CHO procedure of the UE (e.g., because of a lack of resources). Therefore, any CHO configuration relating to this non-longer-available gNB2 need not be processed anymore by the UE.

To said end, the cell-specific mechanism allows to commonly deactivate all CHO configurations associated with a cell by providing the cell-status indication to the UE.

Conversely, the cell-status indication can be also used to indicate activation of a cell, e.g., so as to activate all those (deactivated) CHO configurations relating to said cell.

In the above, it was simply assumed that the cell-status indication is transmitted to the UE by the current serving cell of the UE. Furthermore, several exemplary implementations provide details on the transmission of the cell-status indication. According to two exemplary implementations, the cell-status indication is carried by a new Information Element in an RRC message, such as the RRC Reconfiguration message, or by a control element of a MAC message.

Furthermore, in one exemplary variant, the cell-status indication is implemented as a bitmap, wherein each bit of a bitmap is associated with one candidate target cell cells, and one value of the bit indicates to activate the CHO configuration of the associated candidate target cell, and the other value of the bit indicates to deactivate the CHO configuration of the associated candidate target cell.

The bitmap can be structured e.g., as follows:

| C7 | C6 | C5 | C4 | C3 | C2 | C1 | C0 |
|---|---|---|---|---|---|---|---|
| C15 | C14 | C13 | C12 | C11 | C10 | C9 | C8 |
| C23 | C22 | C21 | C20 | C19 | C18 | C17 | C16 |
| C31 | C30 | C29 | C28 | C27 | C26 | C25 | C24 |

The above bitmap assumes 32 possible candidate target cells, C0-C31. Value 1 may indicate that the associated candidate cell is activated, and value 0 may indicate that the associated candidate cell is deactivated.

In the following, different exemplary implementations of the improved CHO procedure will be explained, particularly in connection with the structure of the plurality of CHO configurations. The existing (e.g., Release 16) signaling of CHO configurations supports only up to 8 candidate cells to be processed by the UE.

According to a first exemplary implementation, the plurality of CHO configurations of the improved CHO procedure is also limited to 8 exemplary CHO configurations at most. This has the advantage of ensuring backward compatibility, because also legacy UEs (that do not support the improved CHO configuration) can process the plurality of CHO configurations. Then, within said 8 CHO configurations, different subsets of CHO configurations can be defined for being selectively used by the UE, according to the improved CHO procedure (according to any one implementation explained above or below). For instance, this exemplary implementation could be applied to the CHO configurations 1-6 presented above, so as to arrive at the three separate subsets of CHO configurations.

For a legacy UE, all of the CHO configurations (a maximum of 8 CHO configurations) would be processed, considering that the legacy UE cannot distinguish between the different subsets of CHO configurations.

According to another second exemplary implementation, there can be more than 8 CHO configurations according to the improved CHO procedure, such that an improved UE is allowed to be configured with more than 8 CHO configurations, e.g., up to 16, 24 or 32 CHO configurations. In an exemplary variant thereof, however, these CHO configurations can be organized in a sequence, and only the first 8 CHO configurations in the sequence can be used for a CHO in the current serving cell. Put differently, the preparation of the plurality of CHO configurations is limited such that only a maximum of 8 CHO configurations can be prepared for a subset. For instance, upon a successful completion of the CHO procedure between the UE and another target cell, the UE can replace the first 8 elements of the sequence with the 8 CHO configurations applicable in the new serving cell.

For a legacy UE, all of the 8 first CHO configurations would be processed correctly. This could be in line with existing Release-16 specifications, which require that all stored CHO configurations are to be evaluated by the UE for CHO, i.e. no single candidate target cell (and the corresponding stored CHO configuration) can be exempted from being evaluated as a candidate for the CHO A legacy UE is not aware of the remaining CHO configurations, after the first 8 CHO configurations, which thus will not be processed by the legacy UE either. According to further exemplary implementations of the improved CHO procedure according to the first solution, according to the 3GPP standards, the following could be defined for the new Release 18:

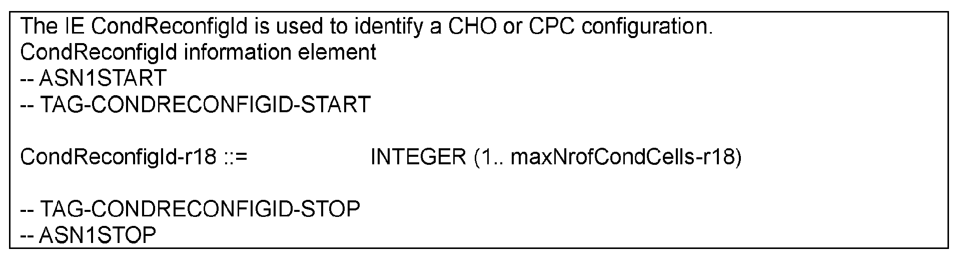

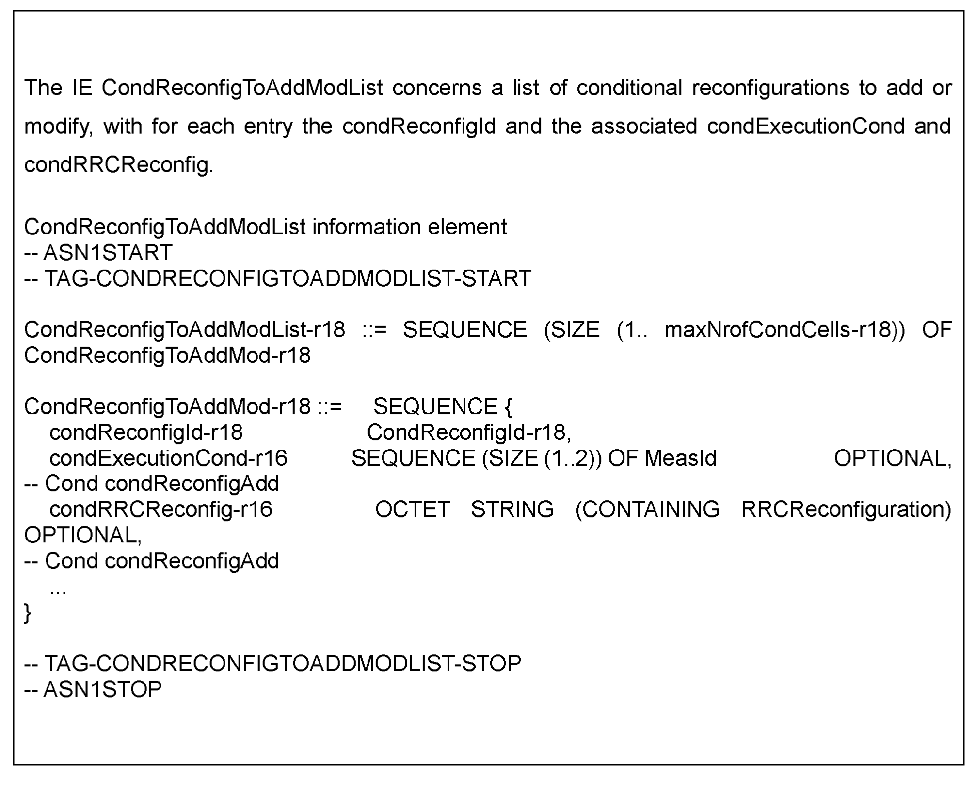

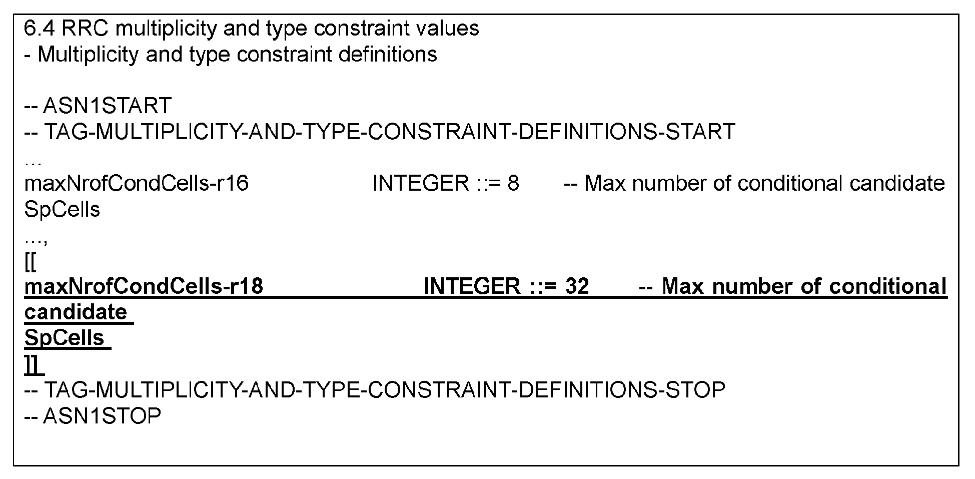

As apparent from the above new exemplary definitions for 3GPP Release 18, a new parameter maxNrofCondCell-r18 would be defined allowing a maximum of 32 conditional candidate SPcells.

Furthermore, a new CondReconfigToAddModList would be defined, making reference to this new parameter maxNrofCondCells-r18. Moreover, a new CondReconfiglD-r18 is defined too, allowing to identify a CHO configuration.

Correspondingly, when referring back to the second implementation according to which the first 8 CHO configurations would be treated as the candidates for the current serving cell, the sequence of CHO configurations could for example be given by the above new 3GPP Rel. 18 definitions, particularly by the sequence provided by the CondReconfigID-r18.

In the above definitions, it was assumed that the new functionality is introduced for 3GPP Release 18, therefore including the term "r18". However, it should be also noted that the new functionality can be introduced in still later 3GPP Releases, e.g., 19, 20, etc., in which case the above definitions could be re-named by using the corresponding term "r19", "r20", etc., instead of "r18".

In the above, different implementations of the improved CHO procedure have been presented. In the different implementations, the preparation of the plurality of CHO configurations and the transmission of these plurality of CHO configurations to the UE was already discussed. In the following, a detailed and exemplary implementation of the improved CHO procedure will be presented, particularly regarding how the source gNB of Fig. 20 prepares the plurality of CHO configurations. This will be done based on **Fig. 21**, which illustrates an exemplary and simplified signaling exchange between the different entities involved in the preparation of the plurality of CHO configurations according to the improved CHO procedure.

The signaling diagram of Fig. 21 illustrates a particular sequence of signals in a grouped manner, for sake of clarity and understanding. In particular, the pre-preparation of the gNB1-related CHO configurations, performed by the gNB1, follows a logical order of requests and responses, but is illustrated together in sequence only for sake of clarity. Similarly, the pre-preparation of the gNB2-related CHO configurations, performed by the gNB2, follows a logical order of requests and responses, but is illustrated together in sequence only for sake of clarity. Similarly, the preparation of the gNB0-related CHO configurations, performed by the gNB0 follows a logical order of requests and responses, but is also illustrated together only for sake of clarity. However, the sequence of messages of Fig. 21 can be different, while still following the logical order of the steps.

It is assumed that gNB0, to which the UE is connected at the beginning, is responsible for preparing the plurality of CHO configurations. Correspondingly, the preparation involves the preparation of the gNB1 and gNB2 CHO configurations to be used by the UE when being connected at gNB0. To said end, the gNB0 transmits a CHO Prepare message to gNB1 and receives a CHO ACK message from gNB1 with the requested CHO configuration parameters of gNB1 for a potential CHO from gNB0. Similarly, the gNB0 transmits a CHO Prepare message to gNB2 and receives a CHO ACK message from gNB2 with the requested CHO configurations parameters of gNB2 for a potential CHO from gNB0.

Although not illustrated in Fig. 21, the gNB0 can then generate the gNB0-related CHO configuration for gNB1, by determining a suitable execution condition and including the corresponding CHO configuration parameters for gNB1 as received from gNB1. In a corresponding manner, the gNB0 can then generate the gNB0-related CHO configuration for gNB2, by determining a suitable execution condition and including the corresponding CHO configuration parameters for gNB2 as received from gNB2.

As a result, gNB0 has prepared the CHO configurations for subsetA, i.e. the ones to be processed by the UE when being connected to gNB0.

Moreover, the CHO preparation also involves the pre-preparations for CHOs in the future, where the UE is connected with either gNB1 or gNB2. The CHO pre-preparations are performed respectively by gNB1 and gNB2, and can be respectively triggered by the CHO Prepare message transmitted from gNB0 as explained above for the subset A CHO preparation.

For instance, after the gNB1 receives the CHO Prepare message from gNB0, gNB1 transmits CHO pre-preparation messages to gNB2 and gNB0 for requesting the CHO configuration parameters for a respective CHO from gNB1 to respectively gNB2 and gNB0. In response, gNB1 receives the requested CHO configuration parameters from gNB2 and gNB0, as apparent from Fig. 21.

Although not illustrated in Fig. 21, gNB1 can then generate the gNB1-related CHO configuration for gNB2, by determining a suitable execution condition and including the corresponding CHO configuration parameters for gNB2 as received from gNB2. In a corresponding manner, the gNB1 can generate the gNB1-related CHO configuration for gNB0, by determining a suitable execution condition and including the corresponding CHO configuration parameters for gNB0 as received from gNB0.

The thus generated gNB1-related CHO configurations for gNB2 and gNB0 are then transmitted by gNB1 to gNB0 (gNB0 having triggered the pre-preparation). As a result, gNB0 has thus obtained the CHO configurations for subset B, i.e. the ones to be processed by the UE when being connected to gNB1.

As just explained for the pre-preparation performed by gNB1, a corresponding pre-preparation can also be performed by gNB2. For instance, after gNB2 receives the CHO prepare message from gNB0, gNB2 transmits CHO pre-preparation messages to gNB0 and gNB1 for requesting the CHO configuration parameters for a respective CHO from gNB2 to respectively gNB0 and gNB1. In response, gNB2 receives the requested CHO configuration parameters from gNB0 and gNB1, as apparent from Fig. 21.

Although not illustrated in Fig. 21, gNB2 can then generate the gNB2-related CHO configuration for gNB0, by determining a suitable execution condition and including the corresponding CHO configuration parameters for gNB0 as received from gNB0. In a corresponding manner, gNB2 can generate the gNB2-related CHO configuration for gNB1, by determining a suitable execution condition and including the corresponding CHO configuration parameters for gNB1 as received from gNB2.

The thus generated gNB2-related CHO configurations for gNB0 and gNB1 are then transmitted by gNB2 to gNB0 (gNB0 having triggered the pre-preparation). As a result, gNB0 has thus obtained the CHO configurations for subset C, i.e. the ones to be processed by the UE when being connected to gNB1.

The various CHO configurations can then be transmitted to the UE for use in the different CHOs, when being located in the different cells of gNB0, gNB1, and gNB2.

In the above exemplary implementation, as explained with reference to Fig. 21, it was assumed that the gNB1-related CHO configurations for gNB0 and gNB2 are transmitted separately from one another, and also separately from the gNB0-related CHO configuration for gNB1. However, according to an exemplary variant of this implementation, one CHO ACK message can carry more than one CHO configuration, such as one or more of the gNB1-related CHO configurations for gNB0 and gNB2 and the gNB0-related CHO configuration for gNB1.

Similarly, assuming an improved CHO ACK message, gNB2 can transmit one or more of the gNB2-related CHO configurations for gNB0 and gNB1 and the gNB0-related CHO configuration for gNB2 back to gNB0 in one CHO ACK message.

To said end, a new parameter (e.g., an OCTET string or container) of a conditional configuration can be included in the handover acknowledge message from a target node to the source node.

According to an exemplary 5G-compliant implementation, the HANDOVER REQUEST ACKNOWLEDGE message, as known e.g., from TS 38.413 v17.0.0, can be adapted as follows: 9.2.3.5 HANDOVER REQUEST ACKNOWLEDGE (from TS 38.413 v17.0.0)

This message is sent by the target NG-RAN node to inform the AMF about the prepared resources at the target.

### Direction: NG-RAN node → AMF.

| **IE/Group Name** | | **Prese nee** | **Range** | **IE type and reference** | **Semantics description** | **Critic ality** | **Assigned Criticality** |
|---|---|---|---|---|---|---|---|
| Message Type | | M | | 9.3.1.1 | | YES | reject |
| AMF UE NGAP ID | | M | | 9.3.3.1 | | YES | ignore |
| RAN UE NGAP ID | | M | | 9.3.3.2 | Allocated at the target NG-RAN node. | YES | ignore |
| **PDU Session Resource Admitted List** | | | *1* | | | YES | ignore |
| | >**PDU Session Resource Admitted Item** | e A | *1..<maxno ofPDUSes sions>* | | | - | |
| | >>PDU Session ID | M | | 9.3.1.50 | | - | |
| | >>Handover Request Acknowledge Transfer | M | | OCTET STRING | Containing the *Handover Request Acknowledge Transfer* IE specified in subclause 9.3.4.11. | - | |
| **PDU Session Resource Failed to Setup List** | | | *0..1* | | | YES | ignore |
| | **>PDU Session Resource Failed to Setup Item** | | *1..<maxno ofPDUSes sions>* | | | - | |
| | >>PDU Session ID | M | | 9.3.1.50 | | - | |
| | >>Handover Resource Allocation Unsuccessful Transfer | M | | OCTET STRING | Containing the *Handover Resource Allocation Unsuccessful Transfer* IE specified in subclause 9.3.4.19. | - | |
| Target to Source Transparent Container | | M | | 9.3.1.21 | | YES | reject |
| **Conditional Confiquration (Container)** | | | | **OCTET STRING** | **Containinq conditional confiquration from target node to source node** | | |
| Criticality Diagnostics | | O | | 9.3.1.3 | | YES | ignore |
| NPN Access Information | | O | | 9.3.3.46 | | YES | reject |
| RedCap Indication | | O | | 9.3.1.228 | | YES | ignore |

In the above definitions, the additionally-proposed definitions for the Conditional Configuration container are bold and underlined.

Correspondingly, according to this variant, the candidate target cell (be it gNB1 or gNB2) does not immediately respond to the CHO preparation message received from gNB0. Rather, the candidate target cell may await the end of the respective CHO pre-preparation procedures, so as to then transmit all the generated information together back to the requesting gNB0.

The above implementations of the improved CHO procedure are independent from whether the UE is in dual connectivity or not. In the following, it is exemplarily assumed that the UE is in dual connectivity.

According to one exemplary implementation, the UE is configured with a master cell group, MCG, and a plurality of secondary cell groups, SCG, i.e. with more than one SCG. For instance, in a 5G-compliant exemplary implementation, the UE could be configured with more than one *MRDC-SecondaryCellGroupConfig* Information Element as part of the *RRCReconfiguration* message (see e.g., TS 38.331 v17.1.0).

However, only one of the plurality of SCGs is active at a given time for the UE, such that the UE is connected to the one or more cells of the active SCG. The other SCGs are inactive (can also be termed "deactivated").

This implementation is different from the current 3GPP specifications, such as TS 38.331, according to which the UE can be configured with only one SCG. Overall, the 3GPP specifications allow the UE to be configured with two sets of cell group configurations, e.g., one for the Master Cell Group, MCG, and the other one for the Secondary Cell Group, SCG. Furthermore, the one SCG may either be configured as being activated or deactivated, while the MCG always remains in an activated state. The deactivation can be carried via an RRC message. The Conditional PSCell Change (CPC) can happen either as an intra-SN handover, or as an inter-SN handover.

According to said implementation, there are at least two different possibilities on how the UE determines which of the plurality of SCGs is the active one. According to a first option, the UE can determine the active SCG to be that one that is first configured for the UE. For instance, the UE can be configured successively with the SCGs, and the first added SCG (when the UE has no SCG yet) can be determined to be the active SCG even when further SCGs are configured subsequently. According to a section option, which can be in addition or alternatively to the first option, the UE determines the active SCG based on an explicit indication, e.g., received from the a gNB . This explicit indication can then also be used to change the active SCG from one SCG to another SCG.

The configuration of several SCGs can be useful so as to save signaling overhead. For instance, it is assumed that the UE has two SCGs, a first active SCG and a second inactive SCG, and that the UE wants to perform a CPC procedure with a target cell (PSCell) that is not in the list of SCells configured for the currently active first SCG. However, the target cell is in the list of SCells configured for the currently inactive second SCG. Therefore, the CPC procedure results in the activation of the second SCG, for which the SCG configuration information is already available at the UE. The UE thus does not need to execute a reconfiguration procedure for setting up the new second SCG. Further, the first SCG can be maintained at the UE and is deactivated, such that the UE does not need to release the configuration of the first SCG.

According to the current 3GPP standard (e.g., TS 38.331), there is an existing IE *scg-State* to indicate if the SCG is in a deactivated state. According to one variant of this implementation, it is possible to reuse this IE (or introduce another IE similar to scg-State above) for dual connectivity and the multiple-SCG case.

The following exemplary details are provided for defining how the different SCGs can be configured to the UE. In one example, the UE receives, from its current serving cell, configuration information, e.g., in an RRC message. A new variable can be introduced in RRC to store the configuration of the additional SCGs.

The configuration information may for instance include one or more of:
- a common cell ID of cells of the respective cell group,
- a common frequency range of cells of the respective cell group, and
- common radio resources of cells of the respective cell group.

In a further additional example, the configuration information of an SCG may further include a list of candidate cells for evaluation for a CHO/CPC/CPA procedure, when activating the SCG.

According to a further variant, the UE does not perform one or more of the following procedures on a deactivated SCG:
- random access with a cell of the respective SCG,
- radio link measurements with a cell of the respective SCG, and
- uplink synchronization with a cell of the respective SCG.

In particular, according to the current 3GPP specification, when an SCG is configured to the UE, the UE is supposed to immediately apply the configuration and to then perform random access on the PSCell of said SCG, including achieving uplink synchronization. Furthermore, irrespective of the SCG state (e.g., activated or deactivated), the UE is supposed to perform RLM measurements on the one SCG.

Such a behaviour, however, is disadvantageous in case there are more than one SCG configured to the UE. One function of having multiple SCG configurations at the UE is to enable the UE to immediately apply the conditional configuration after a successful handover. Therefore, as mentioned above, the UE does not need to perform these procedures for the additional SCG(s) that are in a deactivated state.

Rather, the UE simply saves the configuration of these additional, deactivated, SCG(s) for future use, without applying them at present. The configuration of these additional, deactivated, SCGs are applied when required.

With the introduction of several SCG configurations, it is beneficial to also introduce a mechanism to differentiate between the different SCG configurations at the UE. This facilitates addressing the separate SCG configurations, e.g., to support addition, modification, release and/or (de)activation of an SCG configuration.

To said end, one exemplary option allows identifying an SCG configuration based on the combination of the cell ID of the PSCell in the respective SCG and of an identifier of radio resources used by the cells of the respective SCG for transmission and reception. In one example, this radio resource identifier is the ARFCN (Absolute Radio-Frequency Channel Number). This option thus reuses ID parameters of the SCG configuration to allow identifying and differentiating them. However, one disadvantage may occur if two SCG configurations are configured with the same PSCell and the same radio resource identifier, while being different e.g., in having different SCells or including other configuration elements, e.g., in the intra-SN configurations. Such two configurations could thus not be distinguished. Furthermore, this first option might result in a higher signaling overhead, because the combination of these two IDs is quite long and might have to be signalled every time when addressing the SCG configurations, e.g. for modification, releasing or (de)activatation.

According to a second option, a new dedicated SCG identifier can be created to differentiate between the plurality of SCGs. In said case, the length of the dedicated SCG identifier need only be as long as necessary to differentiate between the maximum number of SCGs, e.g., 5 bits to distinguish 32 SCGs. The new SCG identifier can be named e.g., scgConfigldentifier.

According to further exemplary implementations, when a UE is configured for performing CPC or CPA, the configuration may include a configuration for an SCG, which can be applied once the UE determines a suitable candidate cell for handover. The configuration also includes an associated execution condition, used to identify whether the candidate is suitable for the conditional handover or not. Once a candidate becomes suitable or is triggered, then, the UE applies the associated configuration for the SCG and executes the handover. Considering that there are several SCG configurations, the UE determines which of the several SCG configurations should be used upon executing the handover to a configured candidate cell.

According to one option, the UE stores information associating each of the plurality of SCGs with a cell. Then, upon a successful completion of the conditional procedure to a candidate target cell, the UE determines the SCG that is associated with said candidate target cell of the completed conditional procedure based on the stored information.

This allows the UE to identify the SCG configuration it has to be applied.

### Improved CPC procedure

After the detailed explanations above with regard to an improved CHO procedure, in the following an exemplary and simplified implementation of an improved conditional cell change (CPC) procedure will be explained. The improved CPC procedure can be based on the principles explained above in connection with the improved CHO procedure and most will thus not be repeated.

The improved CPC procedure can be understood as being a procedure according to which the UE disconnects from a source cell and connects to a candidate target cell (possibly among many candidates) upon fulfilling an execution condition, i.e. in correspondence to the CHO procedure discussed above. The CPC procedure is typically used when the UE is in dual connectivity, e.g., when the UE is already configured with a master cell group and a secondary cell group and is connected to at least one primary cell of the master cell group (PCell) and to at least one primary cell of the secondary cell group (PSCell). The improved CPC procedure can be performed by the UE so as to change the PSCell of the SCG. Correspondingly, the source cell and the target cell participating in the CPC belong to a secondary cell group of the UE in dual connectivity.

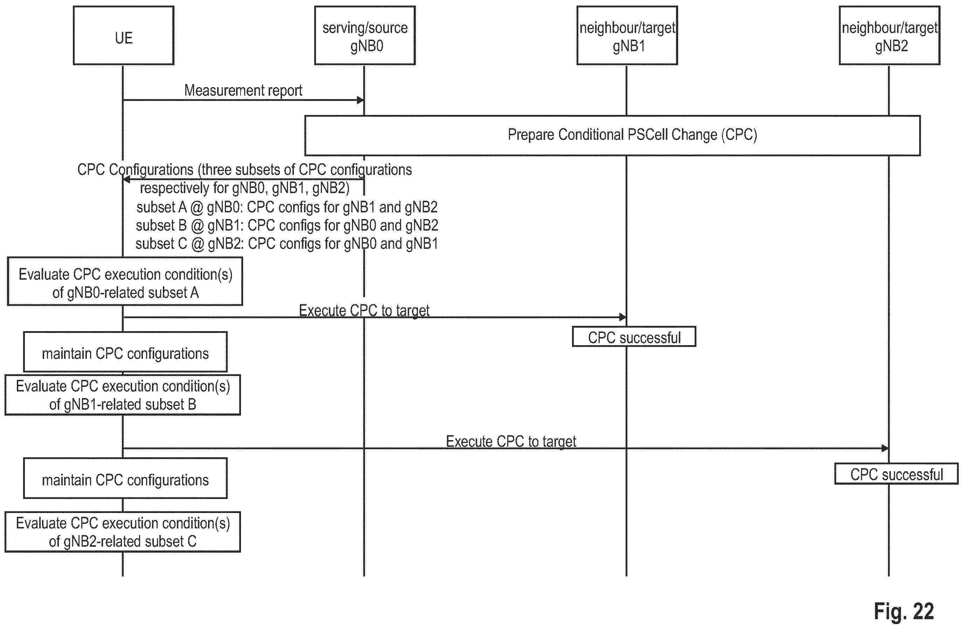

Fig. 22 illustrates such an exemplary and simplified implementation of an improved conditional cell change (CPC) procedure, illustrating the exchange of messages between the different participating entities (here the UE, gNB0, gNB1 and gNB2) and the steps performed at these entities.

As apparent from Fig. 22, the CPC preparation is significantly different from the corresponding CPC preparation in the prior art, e.g., see Fig. 11. In particular, the CPC preparation involves the preparation of a plurality of CPC configurations for possible candidate target cells gNB1 and gNB2. The plurality of CPC configurations may thus include CPC configurations that are to be used by the UE when being connected to the source cell gNB0. Furthermore, however, according to the improved CPC procedure, the plurality of CPC configurations may also include CPC configurations that are not to be used by the UE now when being connected to the source cell gNB0, but that are to be used by the UE in the future when being connected to another serving cell (such as gNB1 or gNB2).

In other words, the plurality of CPC configurations includes different subsets of CPC configurations, wherein one subset of CPC configurations is to be used immediately by the UE in connection with the sourcecell gNB0. However, at least one further subset of CPC configurations among the plurality of cell configurations is pre-prepared for being used later.

Similar to what was explained in detail in connection with the improved CHO procedure, the plurality of CPC configurations can include:

| **CPC config #** | **Content of cell config** | **Association with a subset** |
|---|---|---|
| CPC config 1 | gNB1 CPC config @ gNB0 | Subset A |
| CPC config 2 | gNB2 CPC config @ gNB0 | Subset A |
| CPC config 3 | gNB0 CPC config @ gNB1 | Subset B |
| CPC config 4 | gNB2 CPC config @ gNB1 | Subset B |

According to one exemplary option, the plurality of CPC configurations may also include:

| **CPC config #** | **Content of cell config** | **Association with a subset** |
|---|---|---|
| CPC confiq 5 | qNB0 CPC config @ qNB2 | Subset C |
| CPC confiq 6 | qNB1 CPC config @ qNB2 | Subset C |

As further apparent from Fig. 22, after the preparation of the plurality of CPC configurations, the source gNB0 transmits same to the UE. The UE will then proceed to process the CPC configurations to be evaluated by the UE when in connection with its current serving cell, here gNB0. Correspondingly, the UE will evaluate the execution conditions of gNB0-related CPC configurations 1 and 2, to determine whether some execution condition of a CPC configuration is fulfilled.

On the other hand, the UE will not process CPC configurations that do not refer to the current serving cell, i.e. will not process CPC configurations of other subsets among the plurality of CPC configurations, here e.g., of subsets B and C. Therefore, the UE does not spend resources and time on processing CPC configurations for which a CPC is not to be performed.

When the execution condition of one evaluated CPC configuration is fulfilled, the UE proceeds to perform the CPC procedure with the corresponding candidate target cell of the fulfilled CPC configuration. In the exemplary scenario of Fig. 22, it is assumed that the UE performs a CPC procedure with the candidate target gNB1. The CPC procedure can be performed based on the configuration parameters of the corresponding CPC configuration for gNB1.

A further step of the improved CPC procedure involves maintaining the plurality of CPC configurations 1-6, upon the successful completion of the CPC to the gNB1. Consequently, the plurality of CPC configurations are not deleted from UE memory at this point of time. This is in contrast to the legacy CPC procedure (e.g., explained in Fig. 11), in which the UE releases all the CPC configurations upon the successful CPC.

As a result, the CPC configurations 3 and 4 are immediately available at the UE for being processed upon connecting to the new serving cell gNB1. Therefore, a delay is avoided for performing a subsequent CPC, otherwise caused by the required preparation of new CPC configurations at the new serving cell, gNB1.

CPC configurations 3 and 4 are the gNB1-related CPC configurations of subset B. In a corresponding manner as before, the UE can evaluate the execution conditions of the gNB1-related CPC configurations 3 and 4 to determine whether some execution condition is fulfilled. Again, the UE will not process CPC configurations that do not refer to the current serving cell, here new serving cell gNB1.

As apparent from Fig. 22, it is exemplarily assumed that the execution condition for the gNB2 CPC configuration 4 (see above table) is fulfilled, such that the UE performs a CPC procedure with the candidate target gNB2. The CPC procedure can be performed based on the configuration parameters of the corresponding CPC configuration 4 for gNB2.

Similarly, the UE again maintains the plurality of CPC configurations 1-6 upon the successful completion of the CPC to the gNB2. As a result, the CPC configurations 5 and 6 are immediately available at the UE for being processed upon connecting to the new serving cell gNB2.

The improved CPC procedure may then continue in the same manner further.

Further improvements and variants of the improved CPC procedure follow the same principles as the corresponding improvements and variants of the improved CHO procedure presented above. Therefore, the details are provided above with respect to the improved CHO procedure and will not be repeated.

For instance, in the same manner as explained for the improved CHO procedure, the CPC procedure can be improved as to how the UE can determine the suitable CPC configuration(s) to be used, following e.g., the first implementation (based on current serving cell) or based on the second implementation (controlled by new serving cell by transmitting an indication to the UE).

Moreover, in the same manner as explained for the improved CHO procedure, a CPC configuration can have a state of activated or deactivated. Correspondingly, a CPC configuration with an activated state is processed by the UE, while a CPC configuration with a deactivated state is not processed by the UE. The CPC procedure can be further improved by allowing the setting of the state of the CPC configurations according to the above concepts. The process of setting the state of the CPC configurations can be performed autonomously by the UE based on the current serving cell (see e.g., above first implementation), or based on a suitable indication from the current serving cell (see, e.g., above second implementation). Further details are provided above with respect to the improved CHO procedure and will not be repeated.

Moreover, in the same manner as explained for the improved CHO procedure, the CPC procedure can be further improved by implementing a mechanism for setting the usage of CPC configurations on a cell-specific basis. In particular, the UE receives a cell-status indication from the current serving base station (e.g., source base station gNB0), wherein the cell-status indication indicates one or more candidate cells for which the associated CPC configuration(s) are to be activated or deactivated. Upon receiving the cell-status indication, the UE can deactivate or activate the CPC configurations relating to said indicated cell. Furthermore, reference is made to the above-explained improved CHO procedure and particularly to the details on how to implement the cell-status indication, which also apply to the cell-status indication for the improved CPC procedure, including inter-alia the use of a new IE of a RRC message or a CE of a MAC message, and the use of a bitmap. Further details are provided above with respect to the improved CHO procedure and will not be repeated.

Moreover, in the same manner as explained for the improved CHO procedure, the CPC procedure can be further improved by allowing the plurality of CPC configurations to be limited to 8 at most. Alternatively, there can be more than 8 CPC configurations, in which case only the first 8 CPC configurations in a sequence can be used for a CPC in the current serving cell. Further details are provided above with respect to the improved CHO procedure and will not be repeated.

Moreover, in the same manner as explained for the improved CHO procedure, the CPC procedure may also involve a corresponding exchange of preparation messages and pre-preparation messages between the various gNBs for the preparation of the plurality of CPC configurations. The details were explained above in connection with the CHO procedure, using Fig. 21, and can conceptually be applied as well to the improved CPC procedures. Details are provided above in connection with Fig. 21 for the improved CHO procedure and will not be repeated here. In brief, however, the improved CPC procedure may accordingly include the preparation of the gNB0-related CPC configurations by the current serving cell of gNB0, based on CPC configuration parameters obtained respectively from gNB1 and gNB2, as well as based on execution conditions determined by gNB0.

Furthermore, the improved CPC procedure may also include the pre-preparation of the gNB1-related CPC configurations for gNB2 and gNB0, at the gNB1, e.g., triggered by the CPC prepare message from gNB0. Furthermore, the improved CPC procedure may also include the pre-preparation of the gNB2-related CPC configurations for gNB1 and gNB0, at the gNB2, e.g., triggered by the CPC prepare message from gNB0. The thus generated gNB1-related CPC configurations for gNB2 and gNB0 and the thus generated gNB2-related CPC configurations for gNB0 and gNB1, are then transmitted by gNB1 respectively gNB2 to gNB0. As a result, gNB0 has thus obtained the CPC configurations for subsets B and C.

The various CPC configurations can then be transmitted to the UE for use in the different CPCs, when being located in the different cells of gNB0, gNB1, and gNB2, as explained with reference to Fig. 22.

Moreover, in the same manner as explained for the improved CHO procedure, the CPC procedure may also benefit from the configuration of a plurality of SCGs. Details on how the different SCGs can be configured and (de)activated have been provided already above for the improved CHO procedure and apply to the improved CPC procedure too, such that they will thus not be repeated here. Similarly, details on how the UE determines which of the plurality of SCGs is the active one have been provided already above for the improved CHO procedure and apply to the improved CPC procedure too, such that they will thus not be repeated here. Furthermore, details on that the UE does not need to perform specific procedures on a deactivated SCG (e.g., random access) have been provided already above for the improved CHO procedure and apply to the improved CPC procedure too, such that they will thus not be repeated here. How the plurality of SCGs can be differentiated was also explained in detail above for the improved CHO procedure (see combination of PSCell ID + ARFCN, or new dedicated SCG ID) and apply to the improved CPC procedure too, such that they will thus not be repeated here. Moreover, details on the association of an SCG with a candidate cell for activating the SCG once the UE executes the handover to the candidate cell are provided above for the improved CHO procedure and apply to the improved CPC procedure too, such that they will thus not be repeated here.

According to another exemplary implementation, the subset concept introduced for the improved CPC procedure can be considered together with the SCG concept of dual connectivity. The subset functionality and the SCG functionality are both grouping concepts for grouping of different cells. In one example, a subset can be equivalent to a potential SCG of a UE.

Furthermore, considering the possibility of having multiple SCGs, the multiple subsets could also be considered as the multiple SCGs.

For example, when referring to Fig. 22, subset B consists of CPC configurations for gNB0 and gNB2. A potential SCG for the UE, when being connected to gNB1, can include the same cells, namely gNB0 and gNB2.

### Improved CPA procedure

After the detailed explanations above with regard to improved CHO and CPC procedures, in the following an exemplary and simplified implementation of an improved conditional cell addition (CPA) procedure will be explained. The improved CPA procedure can be based on the principles explained above in connection with the improved CHO procedure and most will thus not be repeated.

The improved CPA procedure can be understood as being a procedure according to which the UE connects to a candidate target cell (possibly among many candidates) upon fulfilling an execution condition, wherein the candidate target cell then becomes a primary cell of a secondary group of cells of the UE different from a master group of cells of the UE. The CPA procedure is typically used when the UE enters dual connectivity, e.g., in the process of setting up the secondary cell group and connecting to the primary cell (PSCell) of said secondary cell group. CPA can then also be used to add further SCell(s) to the SCG, or to create another SCG with another PSCell, even though this other SCG may be in an inactive state at the beginning.

Furthermore, the CPA does not result in a change of the UE connection with the master node (here gNB0), but rather the UE connection with the secondary node (SN) can be connected and disconnected based on each CPA. Correspondingly, for the following explanations, it is exemplarily assumed that the gNB0 is the master node, and gNB1 and gNB2 are the potential secondary nodes to be added via the improved CPA procedure.

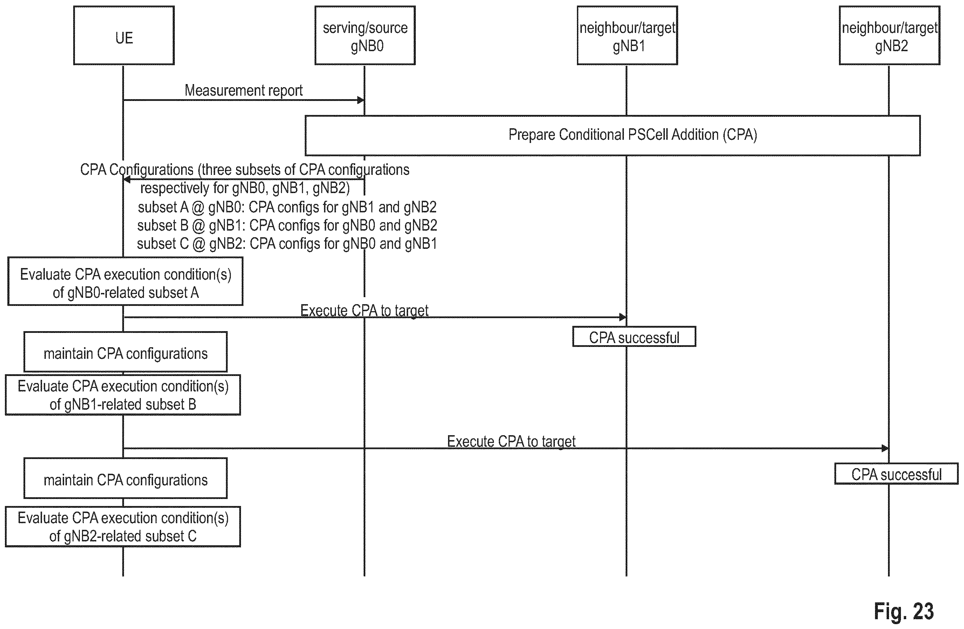

**Fig. 23** illustrates such an exemplary and simplified implementation of an improved conditional cell addition (CPA) procedure, illustrating the exchange of messages between the different participating entities (here the UE, gNB0, gNB1 and gNB2) and the steps performed at these entities.

As apparent from Fig. 23, the CPA preparation is significantly different from the corresponding CPA preparation in the prior art, e.g., see Fig. 12. In particular, the CPA preparation involves the preparation of a plurality of CPA configurations for possible candidate target cells gNB1 and gNB2. The plurality of CPA configurations may thus include CPA configurations that are to be used by the UE when being connected to the source cell gNB0. Furthermore, however, according to the improved CPA procedure, the plurality of CPA configurations may also include CPA configurations that are not to be used by the UE now when being connected to the source cell gNB0, but that are to be used by the UE in the future when being additionally connected to another serving cell (such as gNB1 or gNB2).

In other words, the plurality of CPA configurations includes different subsets of CPA configurations, wherein one subset of CPA configurations is to be used immediately by the UE in connection with the source cell gNB0. However, at least one further subset of CPA configurations among the plurality of cell configurations is pre-prepared for being used later.

Similar to what was explained in detail in connection with the improved CHO procedure, the plurality of CPA configurations can include:

| **CPA config #** | **Content of cell config** | **Association with a subset** |
|---|---|---|
| CPA config 1 | gNB1 CPA config @ gNB0 | Subset A |
| CPA config 2 | gNB2 CPA config @ gNB0 | Subset A |
| CPA config 3 | gNB0 CPA config @ gNB1 | Subset B |
| CPA config 4 | gNB2 CPA config @ gNB1 | Subset B |

According to one exemplary option, the plurality of CPA configurations may also include:

| **CPA config #** | **Content of cell config** | **Association with a subset** |
|---|---|---|
| CPA config 5 | gNB0 CPA config @ gNB2 | Subset C |
| CPA config 6 | gNB1 CPA config @ gNB2 | Subset C |

As further apparent from Fig. 23, after the preparation of the plurality of CPA configurations, the source gNB transmits same to the UE. The UE will then proceed to process the CPA configurations to be evaluated by the UE when in connection with its current serving cell, here gNB0. Correspondingly, the UE will evaluate the execution conditions of gNB0-related CPA configurations 1 and 2, to determine whether some execution condition of a CPA configuration is fulfilled.

On the other hand, the UE will not process CPA configurations that do not refer to the current serving cell, i.e. will not process CPA configurations of other subsets among the plurality of CPA configurations, here e.g., of subsets B and C. Therefore, the UE does not spend resources and time on processing CPA configurations for which a CPA is not to be performed.

When the execution condition of one evaluated CPA configuration is fulfilled, the UE proceeds to perform the CPA procedure with the corresponding candidate target cell of the fulfilled CPA configuration. In the exemplary scenario of Fig. 23, it is assumed that the UE performs a CPA procedure with the candidate target gNB1 thereby generating a new SCG with said target gNB1 as the PSCell. The CPA procedure can be performed based on the configuration parameters of the corresponding CPA configuration for gNB1.

A further step of the improved CPA procedure involves maintaining the plurality of CPA configurations 1-6, upon the successful completion of the CPA to the gNB1. Consequently, the plurality of CPA configurations are not deleted from UE memory at this point of time. This is in contrast to the legacy CPA procedure (e.g., explained in Fig. 12), in which the UE releases all the CPA configurations upon the successful CPA.

As a result, the CPA configurations 3 and 4 are immediately available at the UE for being processed upon connecting to the new serving cell gNB1. Therefore, a delay is avoided for performing a subsequent CPA, otherwise caused by the required preparation of new CPA configurations at the new serving cell, gNB1.

CPA configurations 3 and 4 are the gNB1-related CPA configurations of subset B. In a corresponding manner as before, the UE can evaluate the execution conditions of the gNB1-related CPA configurations 3 and 4 to determine whether some execution condition is fulfilled. Again, the UE will not process CPA configurations that do not refer to the current serving cell, here new serving cell gNB1.

As apparent from Fig. 23, it is exemplarily assumed that the execution condition for the gNB2 CPA configuration 4 (see above table) is fulfilled, such that the UE performs another CPA procedure with the candidate target gNB2, so as to create another SCG with the gNB2 as the PSCell. The CPA procedure can be performed based on the configuration parameters of the corresponding CPA configuration 4 for gNB2.

Similarly, the UE again maintains the plurality of CPA configurations 1-6 upon the successful completion of the CPA with the gNB2. As a result, the CPA configurations 5 and 6 are immediately available at the UE for being processed upon connecting to the new serving cell gNB2.

The improved CPA procedure may then continue in the same manner further.

Further improvements and variants of the improved CPA procedure follow the same principles as the corresponding improvements and variants of the improved CHO procedure presented above. Therefore, the details are provided above with respect to the improved CHO procedure and will not be repeated.

For instance, in the same manner as explained for the improved CHO procedure, the CPA procedure can be improved as to how the UE can determine the suitable CPA configuration(s) to be used, following e.g., the first implementation (based on current serving cell) or based on the second implementation (controlled by new serving cell by transmitting an indication to the UE).

Moreover, in the same manner as explained for the improved CHO procedure, a CPA configuration can have a state of activated or deactivated. Correspondingly, a CPA configuration with an activated state is processed by the UE, while a CPA configuration with a deactivated state is not processed by the UE. The CPA procedure can be further improved by allowing the setting of the state of the CPA configurations according to the above concepts. The process of setting the state of the CPA configurations can be performed autonomously by the UE based on the current serving cell (see e.g., above first implementation), or based on a suitable indication from the current serving cell (see, e.g., above second implementation). Further details are provided above with respect to the improved CHO procedure and will not be repeated.

Moreover, in the same manner as explained for the improved CHO procedure, the CPA procedure can be further improved by implementing a mechanism for setting the usage of CPA configurations on a cell-specific basis. In particular, the UE receives a cell-status indication from the current serving base station (e.g., source base station gNB0), wherein the cell-status indication indicates one or more candidate cells for which the associated CPA configuration(s) are to be activated or deactivated. Upon receiving the cell-status indication, the UE can deactivate or activate the CPA configurations relating to said indicated cell. Furthermore, reference is made to the above-explained improved CHO procedure and particularly to the details on how to implement the cell-status indication, which also apply to the cell-status indication for the improved CPA procedure, including inter-alia the use of a new IE of a RRC message or a CE of a MAC message, and the use of a bitmap. Further details are provided above with respect to the improved CHO procedure and will not be repeated.

Moreover, in the same manner as explained for the improved CHO procedure, the CPA procedure can be further improved by allowing the plurality of CPA configurations to be limited to 8 at most. Alternatively, there can be more than 8 CPA configurations, in which case only the first 8 CPA configurations in a sequence can be used for a CPA in the current serving cell. Further details are provided above with respect to the improved CHO procedure and will not be repeated.

Moreover, in the same manner as explained for the improved CHO procedure, the CPA procedure may also involve a corresponding exchange of preparation messages and pre-preparation messages between the various gNBs for the preparation of the plurality of CPA configurations. The details were explained above in connection with the CHO procedure, using Fig. 21, and can conceptually be applied as well to the improved CPA procedures. Details are provided above in connection with Fig. 21 for the improved CHO procedure and will not be repeated here. In brief, however, the improved CPA procedure may accordingly include the preparation of the gNB0-related CPA configurations by the current serving cell of gNB0, based on CPA configuration parameters obtained respectively from gNB1 and gNB2, as well as based on execution conditions determined by gNB0.

Furthermore, the improved CPA procedure may also include the pre-preparation of the gNB1-related CPA configurations for gNB2 and gNB0, at the gNB1, e.g., triggered by the CPA prepare message from gNB0. Furthermore, the improved CPA procedure may also include the pre-preparation of the gNB2-related CPA configurations for gNB1 and gNB0, at the gNB2, e.g., triggered by the CPA prepare message from gNB0. The thus generated gNB1-related CPA configurations for gNB2 and gNB0 and the thus generated gNB2-related CPA configurations for gNB0 and gNB1, are then transmitted by gNB1 respectively gNB2 to gNB0. As a result, gNB0 has thus obtained the CPA configurations for subsets B and C.

The various CPA configurations can then be transmitted to the UE for use in the different CPAs, when being located in the different cells of gNB0, gNB1, and gNB2, as explained with reference to Fig. 23.

Moreover, in the same manner as explained for the improved CHO procedure, the CPA procedure may also benefit from the configuration of a plurality of SCGs. Details on how the different SCGs can be configured and (de)activated have been provided already above for the improved CHO procedure and apply to the improved CPA procedure too, such that they will thus not be repeated here. Similarly, details on how the UE determines which of the plurality of SCGs is the active one have been provided already above for the improved CHO procedure and apply to the improved CPA procedure too, such that they will thus not be repeated here. Furthermore, details on that the UE does not need to perform specific procedures on a deactivated SCG (e.g., random access) have been provided already above for the improved CHO procedure and apply to the improved CPA procedure too, such that they will thus not be repeated here. How the plurality of SCGs can be differentiated was also explained in detail above for the improved CHO procedure (see combination of PSCell ID + ARFCN, or new dedicated SCG ID) and apply to the improved CPA procedure too, such that they will thus not be repeated here. Moreover, details on the association of an SCG with a candidate cell for activating the SCG once the UE executes the handover to the candidate cell are provided above for the improved CHO procedure and apply to the improved CPA procedure too, such that they will thus not be repeated here.

### Second Solution

**Fig. 24** illustrates a simplified and exemplary UE structure according to an exemplary implementation of the improved mobility procedure of the second solution, which can be implemented based on the general UE structure explained in connection with Fig. 13. The various structural elements of the UE illustrated in said Fig. 24 can be interconnected between one another e.g., with corresponding input/output nodes (not shown) e.g., in order to exchange control and user data and other signals. Although not shown for illustration purposes, the UE may include further structural elements.

As apparent from Fig. 24, the UE may include a cell configuration receiver (for receiving a plurality of cell configurations including cell configuration parameters and an execution condition), an execution condition evaluation circuitry, a conditional cell mobility procedure circuitry, and a cell configuration processing circuitry.

In the present case, the receiver of the UE can thus be exemplarily configured to at least partly perform one or more of receiving cell configurations, etc.

In the present case as will become apparent from the below disclosure, the processing circuitry of the UE can thus be exemplarily configured to at least partly perform one or more of executing the conditional cell mobility procedure when the execution condition is fulfilled, evaluating the execution conditions, storing cell pre-configurations, releasing previous cell configurations, etc.

In the present case as will become apparent from the below disclosure, the transmitter of the UE can thus be exemplarily configured to at least partly perform one or more of transmitting measurement reports to the serving cell of the UE, etc.

One exemplary procedure as will be disclosed in more detail further below is implemented by a UE that includes the following. A receiver of the UE receives a first set of one or more cell configurations. Each cell configuration comprises cell configuration parameters for performing a conditional cell mobility procedure with a respective candidate target cell and comprises an execution condition as to when to execute the conditional cell mobility procedure with said respective candidate target cell. At least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell. Circuitry of the UE evaluates the execution conditions of the first set of cell configurations. The circuitry, when the execution condition for the respective candidate target cell among the first set of cell configurations is fulfilled, executes the conditional cell mobility procedure with said respective candidate target cell, based on the cell configuration parameters of said respective candidate target cell. Upon successful completion of the conditional cell mobility procedure, the circuitry, when in operation:
- stores the cell pre-configuration for the other candidate target cell as a cell configuration for the other candidate target cell,
- releases the stored first set of cell configurations, and
- evaluates the execution condition of the newly stored cell configuration for the other candidate target cell. A corresponding exemplary method comprises the following steps performed by a UE:
   receiving a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
   wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
   evaluating the execution conditions of the first set of cell configurations,
   executing, when the execution condition for the respective candidate target cell among the first set of cell configurations is fulfilled, the conditional cell mobility procedure with said respective candidate target cell, based on the cell configuration parameters of said respective candidate target cell,
   upon successful completion of the conditional cell mobility procedure:
      - storing the cell pre-configuration for the other candidate target cell as a cell configuration for the other candidate target cell,
      - releasing the stored first set of cell configurations, and
      - evaluating the execution condition of the newly stored cell configuration for the other candidate target cell.

A corresponding sequence diagram for an exemplary UE behaviour in line with the above-discussed UE and UE method is illustrated in **Fig. 25**.

The above-described improved mobility procedure thus achieves the object and overcomes some of the drawbacks explained above. For instance, the improved mobility procedure of the second solution involves that the UE has a plurality of cell configurations, that in turn include a pre-prepared cell configuration for another candidate cell. Correspondingly, a cell configuration for a potential future conditional cell mobility procedure for the other candidate cell is already available at the UE, before performing the present conditional cell mobility procedure and can immediately be used by the UE upon successful completion of the conditional cell mobility procedure. Thus, the improved mobility procedure allows expediting the subsequent conditional cell mobility procedure.

Some exemplary implementations of the improved mobility procedure also involve improved base stations, particularly an improved source base station, to which the UE is currently connected (termed e.g., serving base station because the base station serves the UE) and an improved target base station, being the target of the conditional cell mobility procedure. Correspondingly, the improved mobility procedure also provides improved base stations that participate therein, as will be explained in the following.

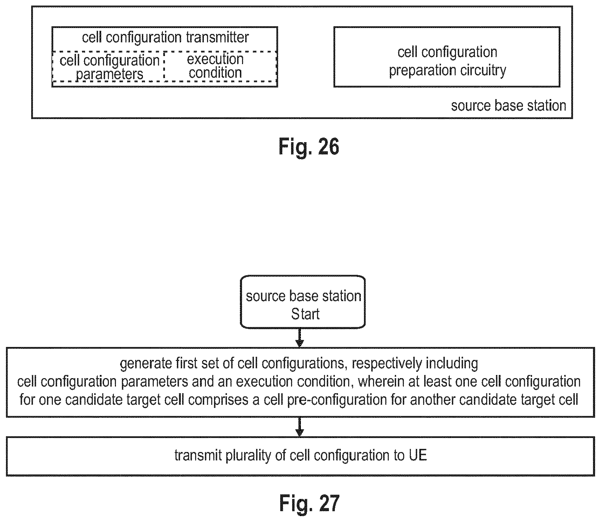

Fig. 26 illustrates a simplified and exemplary source base station structure according to an exemplary implementation of the improved mobility procedure, which can be implemented based on the general base station structure explained in connection with Fig. 13. The various structural elements of the source base station illustrated in said Fig. 26 can be interconnected between one another e.g., with corresponding input/output nodes (not shown) e.g., in order to exchange control and user data and other signals. Although not shown for illustration purposes, the source base station may include further structural elements.

As apparent therefrom, the source base station comprises a cell configuration transmitter (the cell configuration comprising cell configuration parameters and execution condition), and a cell configuration preparation circuitry.

In the present case as will become apparent from the below disclosure, the receiver of the source base station can thus be exemplarily configured to at least partly perform one or more of receiving requested cell configuration parameters, and receiving cell configurations for other candidate target cells, etc.

In the present case as will become apparent from the below disclosure, the processing circuitry of the source base station can thus be exemplarily configured to at least partly perform one or more of determining cell configuration parameters, and generating cell configurations, etc.

In the present case as will become apparent from the below disclosure, the transmitter of the source base station can thus be exemplarily configured to at least partly perform one or more of transmitting cell configurations to a UE, transmitting a request to candidate target cells for requesting cell configuration parameters, etc.

One exemplary procedure as will be disclosed in more detail further below is implemented by a source base station that includes the following. Circuitry of the source base station generates a first set of one or more cell configurations. Each cell configuration comprises cell configuration parameters for performing a conditional cell mobility procedure with a respective candidate target cell and comprises an execution condition as to when to execute the conditional cell mobility procedure with said respective candidate target cell. At least one cell configuration for said respective candidate target cell, comprises a cell pre-configuration for another candidate target cell, different from the respective candidate target cell. The cell pre-configuration comprises cell configuration parameters for being used by the UE when being connected to said respective candidate target cell, for performing a conditional cell mobility procedure to the other candidate target cell. A transmitter of the source base station transmits the generated first set of one or more cell configurations to the UE.

A corresponding method comprises the following steps performed by the source base station:
generating a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
transmitting the generated first set of one or more cell configurations to the UE.

A corresponding sequence diagram for an exemplary source base station behavior in line with the above-discussed source base station and corresponding method is illustrated in Fig. 27. The sequence diagram illustrates an exemplary and simplified implementation of the above presented source base station method.

A target base station as explained in detail for the first solution, based on Fig. 18 and 19, can also participate in the second solution. Correspondingly, details regard the behaviour of the target base station will not be repeated here.

As explained above, the improved UE, improved source base station and improved target base station participate in the improved mobility procedure so as to achieve the object, overcome some of the identified problems and achieve advantages.

The improved mobility procedure, during which the above-presented improved apparatus participate in accordance with the second solution will be explained in the following.

As already assumed for the first solution above, it is exemplarily assumed that the improved mobility procedure of the second solution is an improved conditional handover procedure (improved CHO procedure). However, this assumption of the CHO as the improved conditional cell mobility procedure should not be understood in that the improved mobility procedure should be limited to just the conditional handover. Rather, the principles underlying the improved mobility procedure are also applicable to other conditional cell mobility procedures, such as a conditional cell change procedure (e.g., see CPC above) and a conditional cell addition procedure (e.g., see CPA above).

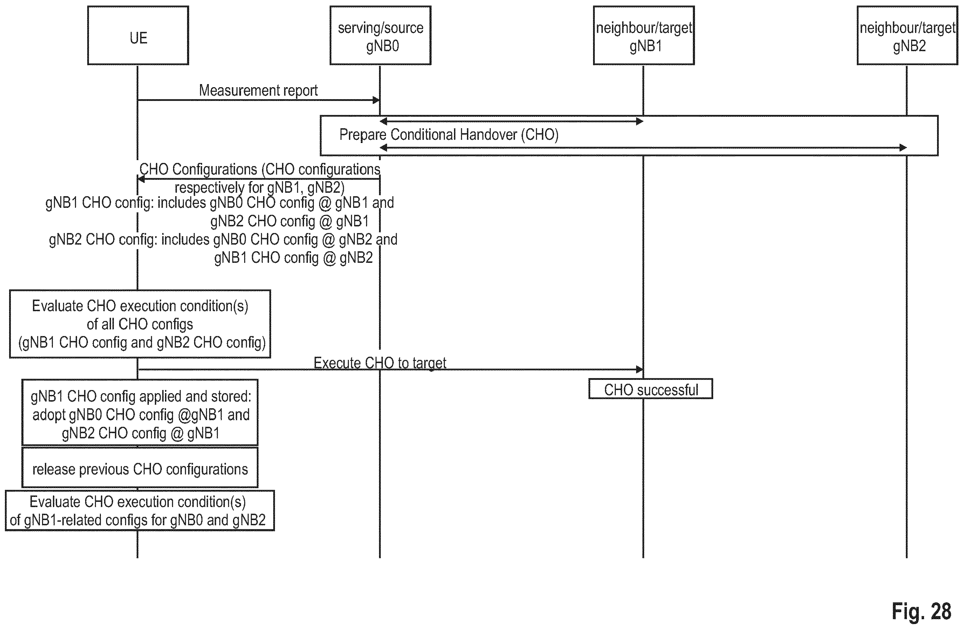

**Fig. 28** is a signaling diagram of an exemplary and simplified implementation of the improved CHO procedure according to the second solution, illustrating the exchange of messages between the different participating entities (here the UE, gNB0, gNB1 and gNB2) and the steps performed at these entities.

It is assumed that the UE is currently connected to the source gNB0. According to the improved CHO procedure, the preparation of the CHO by the source gNB is however significantly different from the corresponding CHO preparation in the prior art, e.g., see Fig. 9 and 10. Furthermore, the CHO preparation for the second solution has a lot of in common with the CHO preparation for the first solution, but also differs therefrom, as will become apparent from below.

As with the CHO preparation in the first solution, the CHO preparation for the second solution also involves the preparation of a plurality of CHO configurations for the possible candidate target cells gNB1 and gNB2. The plurality of CHO configurations may thus include CHO configurations that are to be used by the UE when being connected to the source cell gNB0. Furthermore, however, according to the improved CHO procedure of the second solution, the plurality of CHO configurations may also include CHO configurations that are not to be used by the UE now when being connected to the source cell gNB0 but that are to be used by the UE in the future when being connected to another serving cell (such as gNB1 or gNB2).

However, while the first solution is based on providing the different CHO configurations in different subsets, the second solution relies on the concept of incorporating those CHO pre-configurations to be potentially used by the UE in the future into those CHO configurations that will be used now by the UE.

For example, as already explained above in detail for the 1^{st} solution, the plurality of CHO configurations initially prepared by the serving gNB0 for the second solution may include the following:

| **CHO config #** | **Content of cell config** |
|---|---|
| CHO config 1 | gNB1 CHO config @ gNB0 |
| CHO config 2 | gNB2 CHO config @ gNB0 |
| CHO config 3 | gNB0 CHO config @ gNB1 |
| CHO config 4 | gNB2 CHO config @ gNB1 |

According to one exemplary option, the plurality of CHO configurations may also include:

| **CHO config #** | **Content of cell config** |
|---|---|
| CHO config 5 | gNB0 CHO config @ gNB2 |
| CHO config 6 | gNB1 CHO config @ gNB2 |

Therefore, the serving cell has prepared all the necessary CHO configurations for use by the UE, including those CHO configurations to be used now by the UE when being in connection with the source cell, and including those CHO configurations to be used later by the UE when being in connection with another cell (be it gNB1 or gNB2).

According to one example, the source gNB0 can prepare the above discussed plurality of CHO configuration, in a corresponding manner as explained in connection with Fig. 21 for the first solution. The improved CHO procedure of the second solution may thus also involve a corresponding exchange of preparation messages and pre-preparation messages between the various gNBs for the preparation of the plurality of CHO configurations. The details were explained above in connection with the CHO procedure of the first solution, using Fig. 21, and can conceptually be applied as well to the improved CHO procedure of the second solution. Details are provided above in connection with Fig. 21 for the improved CHO procedure and will not be repeated here. In brief, however, the improved CHO procedure for the second solution may accordingly include the preparation of the gNB0-related CHO configurations by the current serving cell of gNB0, based on CHO configuration parameters obtained respectively from gNB1 and gNB2, as well as based on execution conditions determined by gNB0.

Furthermore, the improved CHO procedure of the second solution may also include the pre-preparation of the gNB1-related CHO configurations for gNB2 and gNB0, at the gNB1, e.g., triggered by the CHO prepare message from gNB0. Furthermore, the improved CHO procedure of the second solution may also include the pre-preparation of the gNB2-related CHO configurations for gNB1 and gNB0, at the gNB2, e.g., triggered by the CHO prepare message from gNB0. The thus generated gNB1-related CHO configurations for gNB2 and gNB0 and the thus generated gNB2-related CHO configurations for gNB0 and gNB1, are then transmitted by gNB1 respectively gNB2 to gNB0. As a result, gNB0 has thus obtained the CHO configurations.

Differently from the first solution, however, the serving cell does not transmit the thus obtained CHO configurations separately to the UE. Instead, according to the second solution, the source base station prepares a CHO configuration for gNB1, to not only include configuration parameters and execution condition for a CHO to gNB1 (see above CHO config 1), but also the gNB1-related CHO pre-configurations for gNB0 and gNB2 (i.e. when the UE would be connected to gNB1; see above CHO configs 3 and 4). The thus resulting CHO configuration for gNB1 is thus extended by the CHO pre-configurations that would be used by the UE when executing the CHO configuration (in this example the CHO to gNB1).

Similarly, the CHO configuration for gNB2 does not only include the configuration parameters and execution condition for a CHO to gNB2 (see above CHO config 2), but as well the gNB2-related CHO pre-configurations for gNB0 and gNB1 (i.e. when the UE would be connected to gNB2; see above CHO configs 5 and 6).

The serving cell gNB0 thus sends the two extended CHO configurations for gNB1 and gNB2 to the UE.

As apparent from Fig. 28, after the preparation of the two extended CHO configurations and their transmission to the UE, the UE will proceed to process the two extended CHO configurations for a potential CHO procedure. Correspondingly, the UE will evaluate the execution conditions of gNB0-related CHO configurations 1 and 2, to determine whether some execution condition of a CHO configuration is fulfilled. The gNB1-related CHO configurations 3 and 4 and the gNB2-related CHO configurations 5 and 6, respectively being stored within the gNB0-related CHO configurations, are not processed by the UE.

When the execution condition of one evaluated CHO configuration is fulfilled, the UE proceeds to perform the CHO procedure with the corresponding candidate target cell of the fulfilled CHO configuration. In the exemplary scenario of Fig. 28, it is assumed that the UE performs a CHO procedure with the candidate target gNB1.

The CHO procedure can be performed based on the configuration parameters of the corresponding CHO configuration for gNB1. Therefore, the UE applies the CHO configuration for gNB1 and thereby additionally adopts the gNB1-related CHO pre-configurations for gNB2 and gNB0 as the CHO configurations to be processed now when being in connection with the new serving cell gNB1.

As a result, the CHO configurations 3 and 4 are immediately available at the UE for being processed upon connecting to the new serving cell gNB1. Therefore, a delay is avoided for performing a subsequent CHO, otherwise caused by the required preparation of new CHO configurations at the new serving cell, gNB1. Furthermore, there is less signaling overhead for the UE at the new serving cell, because there is no need for the new serving cell gNB1 to transmit the gNB1-related CHO configurations to the UE.

In a further optional implementation for this second solution, the UE can then release the previously-stored CHO configurations, considering that these are no longer necessary after the successful CHO to gNB1.

In a corresponding manner as before, the UE can proceed with the CHO procedure at the gNB1, which includes evaluating the execution conditions of the gNB1-related CHO configurations 3 and 4 to determine whether some execution condition is fulfilled.

Although not illustrated in Fig. 28, the UE may perform another CHO procedure with the gNB0 or gNB2.

### Further Aspects

According to a first aspect, a user equipment, is provided that includes the following. A receiver receives, from a source base station, plural cell configurations. Each cell configuration comprises cell configuration parameters for performing a conditional cell mobility procedure with a respective candidate target cell and comprises an execution condition as to when to execute the conditional cell mobility procedure. The plural cell configurations comprise a first subset of cell configurations to be evaluated by the UE when in connection with the source base station. The plural cell configurations comprise a second subset of cell configurations to be evaluated by the UE when in connection with a first candidate target cell of the plurality of candidate target cells, the first candidate target cell being different from a source cell of the source base station. A circuitry of the UE evaluates the execution conditions of only the first subset of cell configurations.

According to a second aspect provided in addition to the first aspect, the circuitry, upon successful completion of the conditional cell mobility procedure between the UE and the first candidate target cell,
- maintains the received plurality of cell configurations, and
- evaluates the execution conditions of only the second subset of cell configurations.

In an optional implementation, the circuitry determines the second subset of cell configurations for being evaluated:
- based on a cell to which the UE is currently connected, wherein each subset of cell configurations within the plurality of cell configurations is associated with one cell.
- based on an indication received from the first candidate target cell, indicating a subset of cell configurations to be evaluated by the UE.

According to a third aspect provided in addition to the first or second aspect, the evaluating of only the first subset of cell configurations comprises that the circuitry does not evaluate the execution conditions of the remaining cell configurations among the plurality of candidate target cells that do not belong to the first subset of cell configurations.

According to a fourth aspect provided in addition to one of the first to third aspects, the plurality of cell configurations comprises more than a number x of cell configurations. In an optional implementation, the plurality of cell configurations is organized in a sequence of cell configurations. The first subset of cell configurations comprises cell configurations of first x elements in the sequence. In a further optional implementation, the number x is 8.

According to a fifth aspect, provided in addition to one of the first to third aspects, the plurality of cell configurations comprises a number of x cell configurations. The first subset of cell configurations comprises less than the x cell configurations. In an optional implementation, the number x is 8.

According to a sixth aspect, provided in addition to one of the first to fifth aspects, cell configurations belonging to the first subset are associated with an activated state, and wherein the remaining cell configurations among the plurality of cell configurations that do not belong to the first subset are associated with a deactivated state. In an optional implementation, a cell configuration associated with the deactivated state is not evaluated by the UE for performing the conditional cell mobility procedure, and wherein a cell configuration associated with the activated state is evaluated by the UE for performing the conditional cell mobility procedure.

According to a seventh aspect, provided in addition to one of the first to sixth aspects, the plurality of cell configurations includes more than one cell configuration associated with one candidate target cell. In an optional implementation, the first subset comprises one or more cell configurations but less than all of the plurality of cell configurations. In a further optional implementation, the cell configurations within the first subset are respectively for different candidate target cells. In an optional implementation, the plurality of cell configurations comprises one subset of cell configurations for each cell configuration within the first subset.

According to an eighth aspect provided in addition to one of the first to seventh aspects, the receiver receives a cell status indication from the source base station, wherein the cell status indication indicates one or more candidate cells:
- for which the associated cell configuration is activated or deactivated.

In an optional implementation, the cell status indication is carried:
- in a Radio Resource Control, RRC, message, or
- in a control element of a Medium Access Control, MAC, message.

In an optional implementation, the cell status indication is a bitmap, wherein each bit of a bitmap is associated with one candidate target cell of the plurality of candidate target cells, and one value of the bit indicates to activate the cell configuration of the associated candidate target cell and the other value of the bit indicates to deactivate the cell configuration of the associated candidate target cell.

According to a ninth aspect provided in addition to the first to eighth aspects, the conditional cell mobility procedure is one of:
- a conditional handover, according to which the UE disconnects from the source cell and connects to a candidate target cell upon fulfilling an execution condition, optionally wherein the source cell and the target cell belong to a same master group of cells of the UE,
- a conditional cell change, according to which the UE disconnects from the source cell and connects to a candidate target cell upon fulfilling an execution condition, wherein the source cell and the candidate target cell belong to a secondary group of cells of the UE different from a master group of cells of the UE, and
- a conditional cell addition, according to which the UE connects to a candidate target cell upon fulfilling an execution condition, wherein the candidate target is a primary cell of a secondary group of cells of the UE different from a master group of cells of the UE.

According to a tenth aspect provided in addition to one of the first to ninth aspects, the cell configuration parameters of a cell configuration include one or more of:
- radio resource configuration of the candidate target cell, such as resource blocks, physical channel configuration,
- security configuration of the candidate target cell,
- dual connectivity information, such as master cell group information, secondary cell group information,
- measurement configuration of the candidate target cell,
- mobility configuration.

In an optional implementation, an execution condition as to when to execute a conditional cell mobility procedure includes one or more sub-conditions, of which one or all have to be fulfilled such that the execution condition is fulfilled. In a further option, a sub-condition relates to the communication quality of one or more of the source cell and the candidate target cell relating to the execution condition.

According to an eleventh aspect provided in addition to one of the first to tenth aspects, each cell configuration of the first subset comprises cell configuration parameters and an execution condition for performing the conditional cell mobility procedure from the source cell to a respective candidate target cell. Each cell configuration of said second subset comprises cell configuration parameters and an execution condition for performing the conditional cell mobility procedure from said first candidate target cell to a respective candidate target cell.

According to a twelfth aspect, provided in addition to one of the first to eleventh aspects, the UE is configured with a master cell group, MCG, and a plurality of secondary cell groups, SCG. Only one of the plurality of SCGs is active at a given time for the UE such that the UE is connected to the one or more cells of the active SCG. In an optional implementation, the circuitry determines the active SCG to be the first SCG configured for the UE. The circuitry determines the active SCG based on an indication received from the source base station.

According to a thirteenth aspect, provided in addition to the twelfth aspect, the configuring of the UE with the MCG and the plurality of SCGs includes:
- the receiver, when in operation, receives from the source base station configuration information for at least one of the MCG and the plurality of SCGs, optionally wherein the configuration information for the plurality of SCGs is received in a Radio Resource Control, RRC, message.

In an optional implementation, the configuration information includes one or more of:
o a common cell ID of cells of the respective cell group,
o a common frequency range of cells of the respective cell group, and
o common radio resources of cells of the respective cell group,

In an optional implementation, the configuration information of an SCG includes:
o a list of candidate cells for evaluation for a conditional cell mobility procedure upon an activation of the SCG.

According to a fourteenth aspect, provided in addition to the twelfth or thirteenth aspects, the circuitry performs one or more the following procedures on the active SCG but not on the deactivated SCG:
o random access with a cell of the respective SCG,
o radio link measurements with a cell of the respective SCG,
o uplink synchronization with a cell of the respective SCG.

According to a fifteenth aspect, provided in addition to one of the twelfth to fourteenth aspects, each of the plurality of SCGs is identified by:
o a combination of an identifier of a primary cell of the respective SCGs with an identifier of radio resources used by cells of the respective SCG for transmission and reception, optionally wherein the identifier of radio resources is an absolute radio-frequency channel number, ARFCN, or
o an SCG identifier for differentiating between the plurality of SCGs.

According to a sixteenth aspect, provided in addition to one of the twelfth to fifteenth aspects, the UE stores information associating each of the plurality of SCGs with a cell. The circuitry, upon a successful completion of the conditional cell mobility procedure to a candidate target cell, determines the SCG that is associated with said candidate target cell of the completed conditional cell mobility procedure based on the stored information. In an optional implementation, the circuitry uses configuration information of the determined SCG.

According to a seventeenth aspect, a base station is provided comprising the following. Circuitry of the base station generates a plurality of cell configurations for a plurality of candidate target cells. Each cell configuration comprises cell configuration parameters for performing a conditional cell mobility procedure between a user equipment, UE, and said respective candidate target cell and comprises an execution condition as to when to execute the conditional cell mobility procedure with said respective candidate target cell. The plurality of cell configurations comprises a first subset of cell configurations to be evaluated by the UE when being in connection with the base station. The plurality of cell configurations comprises a second subset of cell configurations to be evaluated by the UE when being in connection with a first candidate target cell of the plurality of candidate target cells, the first candidate target cell being different from a source cell of the base station. A transmitter of the base station transmits the generated plurality of cell configurations to the UE.

According to a eighteenth aspect, providing in addition to the seventeenth aspect, the generating of the plurality of cell configurations comprises that:
the transmitter transmits a request to the first candidate target cell for requesting the cell configuration parameters of said first candidate target cell,
a receiver receives, from the first candidate target cell and in response to the request, the cell configuration of at least another candidate target cell, wherein the cell configuration of the other candidate target cell includes the cell configuration parameters of said other candidate target cell to be used by the UE when being in connection with the first candidate target cell, and including the execution condition as to when to execute the conditional cell mobility procedure between the UE, when being in connection with the first candidate target cell, and said other candidate target cell.

In an optional implementation, the receiver receives, from the first candidate target cell, the requested cell configuration parameters of said first candidate target cell, and the circuitry determines the execution condition for the requested cell configuration parameters of said first candidate target cell as to when to execute the conditional cell mobility procedure between the UE and said first candidate target cell. In a further optional implementation, the circuitry generates the cell configuration for the first candidate target cell, based on the received cell configuration parameters of said first candidate target cell and the determined execution condition for said first candidate target cell.

According to a nineteenth aspect, provided in addition to the seventeenth or eighteenth aspect, the transmitter transmits a cell status indication to the UE. The cell status indication indicates one or more of:
- candidate cells for which the associated cell configuration is activated,
- candidate cells for which the associated cell configuration is deactivated.

In an optional implementation, the cell status indication is carried:
- in a Radio Resource Control, RRC, message, or
- in a control element of a Medium Access Control, MAC, message.

In a further optional implementation, the cell status indication is a bitmap, wherein each bit of a bitmap is associated with one candidate target cell of the plurality of candidate target cells, and one value of the bit indicates to activate the cell configuration of the associated candidate target cell and the other value of the bit indicates to deactivate the cell configuration of the associated candidate target cell.

According to a 20^{th} aspect, provided in addition to one of the seventeenth to nineteenth aspects, the UE is configured with a master cell group, MCG, and a plurality of secondary cell groups, SCG. Only one of the secondary cell groups is active at a given time for the UE such that the UE is connected to the one or more cells of the active secondary cell group. The transmitter transmits an indication to the UE, indicating which secondary cell group is active

According to a 21^{st} aspect, provided in addition to the 20^{th} aspect, the transmitter transmits to the UE, configuration information for at least one of the master cell group and the plurality of secondary cell groups. In an optional implementation, the configuration information for the plurality of SCGs is transmitted in a Radio Resource Control, RRC, message. In an optional implementation, the configuration information includes one or more of:
- a common cell ID of cells of the respective cell group,
- a common frequency range of cells of the respective cell group,
- common radio resources of cells of the respective cell group.

In a further optional implementation, the configuration information of an SCG includes:
- a list of candidate cells for evaluation for a conditional cell mobility procedure upon an activation of the SCG.

According to a 22^{nd} aspect, a base station is provided comprising the following. A receiver of the base station receives, from a source base station, a request for requesting cell configuration parameters of the base station for performing a conditional cell mobility procedure between a user equipment, UE, connected to the source base station, and the base station. Circuitry of the base station, in response to receiving the request, generates a cell configuration of at least another candidate target cell. The cell configuration of the other candidate target cell includes the cell configuration parameters of said other candidate target cell to be used by the UE when being in connection with the base station, and includes the execution condition as to when to execute the conditional cell mobility between the UE, when being in connection with the base station, and said other candidate target cell. A transmitter of the base station transmits the generated cell configuration for the at least other candidate target cell to the source base station.

According to a 23^{rd} aspect, provided in addition to the 22^{nd} aspect, the generating of the cell configuration for the at least other candidate target cell comprises that:
the transmitter transmits a request, to the other candidate target cell, for requesting cell configuration parameters of said other candidate target cell,
a receiver receives, from the other candidate target cell, the requested cell configuration parameters of said other candidate target cell,
the circuitry determines the execution condition as to when to execute the conditional mobility procedure between the UE, when being in connection with the base station, and said other candidate target cell.

According to a 24^{th} aspect, provided in addition to the 22^{nd} or 23^{rd} aspect, the transmitter transmits an indication to the UE, indicating a subset of cell configurations to be evaluated by the UE.

According to a 25^{th} aspect, provided in addition to one of the 22^{nd} to 24^{th} aspects, the circuitry, in response to receiving the request, generates the requested cell configuration parameters of the base station. The transmitter transmits the generated cell configuration parameters of the base station to the source base station.

According to a 26^{th} aspect, a method is provided comprising the following steps performed by a user equipment, UE:
receiving, from a source base station, a plurality of cell configurations for a plurality of candidate target cells, wherein each cell configuration comprises cell configuration parameters for performing a conditional cell mobility procedure with a respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the source base station, wherein the plurality of cell configurations comprises a second subset of cell configurations to be evaluated by the UE when being in connection with a first candidate target cell of the plurality of candidate target cells, the first candidate target cell being different from a source cell of the source base station,
evaluating the execution conditions of only the first subset of cell configurations,
executing, when the evaluated execution condition of a cell configuration among the first subset of cell configurations is fulfilled for the first candidate target cell, the conditional cell mobility procedure with the first candidate target cell, based on the cell configuration parameters of the first candidate target cell.

According to a 27^{th} aspect, a method is provided comprising the following steps performed by a base station:
generating a plurality of cell configurations for a plurality of candidate target cells, wherein each cell configuration comprises cell configuration parameters for performing a conditional cell mobility procedure between a user equipment, UE, and said respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the base station, wherein the plurality of cell configurations comprises a second subset of cell configurations to be evaluated by the UE when being in connection with a first candidate target cell of the plurality of candidate target cells, the first candidate target cell being different from a source cell of the base station,
transmitting the generated plurality of cell configurations to the UE.

According to a 28^{th} aspect, a method is provided comprising the following steps performed by a base station:
receiving, from a source base station, a request for requesting cell configuration parameters of the base station for performing a conditional cell mobility procedure between a user equipment, UE, connected to the source base station, and the base station,
generating, in response to receiving the request, a cell configuration of at least another candidate target cell, wherein the cell configuration of the other candidate target cell includes the cell configuration parameters of said other candidate target cell to be used by the UE when being in connection with the base station, and including the execution condition as to when to execute the conditional cell mobility between the UE, when being in connection with the base station, and said other candidate target cell,
transmitting the generated cell configuration for the at least other candidate target cell to the source base station.

According to a 29^{th} aspect, an integrated circuit is provided, which, in operation, controls a process of a user equipment, UE, the process comprising the following steps performed by the UE:
receiving, from a source base station, a plurality of cell configurations for a plurality of candidate target cells, wherein each cell configuration comprises cell configuration parameters for performing a conditional cell mobility procedure with a respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the source base station, wherein the plurality of cell configurations comprises a second subset of cell configurations to be evaluated by the UE when being in connection with a first candidate target cell of the plurality of candidate target cells, the first candidate target cell being different from a source cell of the source base station,
evaluating the execution conditions of only the first subset of cell configurations,
executing, when the evaluated execution condition of a cell configuration among the first subset of cell configurations is fulfilled for the first candidate target cell, the conditional cell mobility procedure with the first candidate target cell, based on the cell configuration parameters of the first candidate target cell.

According to a 30^{th} aspect, an integrated circuit is provided, which, in operation, controls a process of a base station, the process comprising the following steps performed by the base station:
generating a plurality of cell configurations for a plurality of candidate target cells, wherein each cell configuration comprises cell configuration parameters for performing a conditional cell mobility procedure between a user equipment, UE, and said respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the base station, wherein the plurality of cell configurations comprises a second subset of cell configurations to be evaluated by the UE when being in connection with a first candidate target cell of the plurality of candidate target cells, the first candidate target cell being different from a source cell of the base station,
transmitting the generated plurality of cell configurations to the UE.

According to a 31^{st} aspect, an integrated circuit is provided, which, in operation, controls a process of a base station, the process comprising the following steps performed by the base station:
receiving, from a source base station, a request for requesting cell configuration parameters of the base station for performing a conditional cell mobility procedure between a user equipment, UE, connected to the source base station, and the base station,
generating, in response to receiving the request, a cell configuration of at least another candidate target cell, wherein the cell configuration of the other candidate target cell includes the cell configuration parameters of said other candidate target cell to be used by the UE when being in connection with the base station, and including the execution condition as to when to execute the conditional cell mobility between the UE, when being in connection with the base station, and said other candidate target cell,
transmitting the generated cell configuration for the at least other candidate target cell to the source base station.

According to a 32^{nd} aspect, a user equipment, UE, is provided comprising the following. A receiver of the UE receives a first set of one or more cell configurations. Each cell configuration comprises cell configuration parameters for performing a conditional cell mobility procedure with a respective candidate target cell and comprises an execution condition as to when to execute the conditional cell mobility procedure with said respective candidate target cell. At least one cell configuration for said respective candidate target cell, comprises a cell pre-configuration for another candidate target cell, different from the respective candidate target cell. The cell pre-configuration comprises cell configuration parameters for being used by the UE when being connected to said respective candidate target cell, for performing a conditional cell mobility procedure to the other candidate target cell. A circuitry of the UE evaluates the execution conditions of the first set of cell configurations. The circuitry, when the execution condition for the respective candidate target cell among the first set of cell configurations is fulfilled, executes the conditional cell mobility procedure with said respective candidate target cell, based on the cell configuration parameters of said respective candidate target cell. Upon successful completion of the conditional cell mobility procedure, the circuitry:
- stores the cell pre-configuration for the other candidate target cell as a cell configuration for the other candidate target cell,
- releases the stored first set of cell configurations, and
- evaluates the execution condition of the newly stored cell configuration for the other candidate target cell.

According to 33^{rd} aspect, a base station is provided comprising the following. Circuitry of the base station generates a first set of one or more cell configurations. Each cell configuration comprises cell configuration parameters for performing a conditional cell mobility procedure with a respective candidate target cell and comprises an execution condition as to when to execute the conditional cell mobility procedure with said respective candidate target cell. At least one cell configuration for said respective candidate target cell, comprises a cell pre-configuration for another candidate target cell, different from the respective candidate target cell. The cell pre-configuration comprises cell configuration parameters for being used by the UE when being connected to said respective candidate target cell, for performing a conditional cell mobility procedure to the other candidate target cell. A transmitter of the base station transmits the generated first set of one or more cell configurations to the UE.

According to a 34^{th} aspect, provided in addition to the 33^{rd} aspect above, the generating of the first set of one or more cell configurations comprises that:
the transmitter transmits a request to a first candidate target cell for requesting the cell configuration parameters of said first candidate target cell,
a receiver receives, from the first candidate target cell and in response to the request, the cell configuration of at least another candidate target cell, wherein the cell configuration of the other candidate target cell includes the cell configuration parameters of said other candidate target cell to be used by the UE when being in connection with the first candidate target cell, and including the execution condition as to when to execute the conditional cell mobility procedure between the UE, when being in connection with the first candidate target cell, and said other candidate target cell.

In an optional implementation, the receiver receives, from the first candidate target cell, the requested cell configuration parameters of said first candidate target cell, and the circuitry determines the execution condition for the requested cell configuration parameters of said first candidate target cell as to when to execute the conditional cell mobility procedure between the UE and said first candidate target cell. In an optional implementation, the circuitry generates the cell configuration for the first candidate target cell, by including:
- the cell configuration parameters for the first candidate target cell, received from the first candidate target cell, and the determined execution condition for the first candidate target cell, and
- the cell configuration of the other candidate target cell, received from the first candidate target cell.

According to a 35^{th} aspect, a method is provided method comprising the following steps performed by a user equipment, UE:
receiving a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
evaluating the execution conditions of the first set of cell configurations,
executing, when the execution condition for the respective candidate target cell among the first set of cell configurations is fulfilled, the conditional cell mobility procedure with said respective candidate target cell, based on the cell configuration parameters of said respective candidate target cell,
upon successful completion of the conditional cell mobility procedure:
   - storing the cell pre-configuration for the other candidate target cell as a cell configuration for the other candidate target cell,
   - releasing the stored first set of cell configurations, and
   - evaluating the execution condition of the newly stored cell configuration for the other candidate target cell.

According to a 36^{th} aspect, a method is provided comprising the following steps performed by a base station:
generating a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
transmitting the generated first set of one or more cell configurations to the UE.

According to a 37^{th} aspect, an integrated circuit is provided, which, in operation, controls a process of a user equipment, UE, the process comprising the following steps performed by the UE:
receiving a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
evaluating the execution conditions of the first set of cell configurations,
executing, when the execution condition for the respective candidate target cell among the first set of cell configurations is fulfilled, the conditional cell mobility procedure with said respective candidate target cell, based on the cell configuration parameters of said respective candidate target cell,
upon successful completion of the conditional cell mobility procedure:
   - storing the cell pre-configuration for the other candidate target cell as a cell configuration for the other candidate target cell,
   - releasing the stored first set of cell configurations, and
   - evaluating the execution condition of the newly stored cell configuration for the other candidate target cell.

According to a 38^{th} aspect, an integrated circuit is provided, which, in operation, controls a process of a base station, the process comprising the following steps performed by the base station:
generating a first set of one or more cell configurations, wherein each cell configuration comprises cell configuration parameters for performing a conditional cell mobility procedure with a respective candidate target cell and comprises an execution condition as to when to execute the conditional cell mobility procedure with said respective candidate target cell,
wherein at least one cell configuration for said respective candidate target cell, comprises a cell pre-configuration for another candidate target cell, different from the respective candidate target cell, wherein the cell pre-configuration comprises cell configuration parameters for being used by the UE when being connected to said respective candidate target cell, for performing a conditional cell mobility procedure to the other candidate target cell,
transmitting the generated first set of one or more cell configurations to the UE.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LS I or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation receives, from a source base station, a plurality of cell configurations for a plurality of candidate target cells, wherein each cell configuration comprises cell configuration parameters for performing a conditional cell mobility procedure with a respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the source base station, wherein the plurality of cell configurations comprises a second subset of cell configurations to be evaluated by the UE when being in connection with a first candidate target cell of the plurality of candidate target cells, the first candidate target cell being different from a source cell of the source base station,
a circuitry, which in operation, evaluates the execution conditions of only the first subset of cell configurations,
the circuitry, which in operation and when the evaluated execution condition of a cell configuration among the first subset of cell configurations is fulfilled for the first candidate target cell, executes the conditional cell mobility procedure with the first candidate target cell, based on the cell configuration parameters of the first candidate target cell.

2. The UE according to claim 1, wherein the circuitry, upon successful completion of the conditional cell mobility procedure between the UE and the first candidate target cell,
• maintains the received plurality of cell configurations, and
• evaluates the execution conditions of only the second subset of cell configurations,
optionally wherein the circuitry, when in operation, determines the second subset of cell configurations for being evaluated:
• based on a cell to which the UE is currently connected, wherein each subset of cell configurations within the plurality of cell configurations is associated with one cell.
• based on an indication received from the first candidate target cell, indicating a subset of cell configurations to be evaluated by the UE.

3. The UE according to claim 1 or 2, wherein the evaluating of only the first subset of cell configurations comprises that the circuitry does not evaluate the execution conditions of the remaining cell configurations among the plurality of candidate target cells that do not belong to the first subset of cell configurations.

4. The UE according any one of claims 1 to 3, wherein the plurality of cell configurations comprises more than a number x of cell configurations,
optionally wherein the plurality of cell configurations is organized in a sequence of cell configurations, and wherein the first subset of cell configurations comprises cell configurations of first x elements in the sequence,
optionally wherein the number x is 8.

5. The UE according to any one of claims 1 to 3, wherein the plurality of cell configurations comprises a number of x cell configurations, and
wherein the first subset of cell configurations comprises less than the x cell configurations, optionally wherein the number x is 8.

6. The UE according to any one of claims 1 to 5, wherein cell configurations belonging to the first subset are associated with an activated state, and wherein the remaining cell configurations among the plurality of cell configurations that do not belong to the first subset are associated with a deactivated state,
optionally wherein a cell configuration associated with the deactivated state is not evaluated by the UE for performing the conditional cell mobility procedure, and wherein a cell configuration associated with the activated state is evaluated by the UE for performing the conditional cell mobility procedure.

7. The UE according to any one of claims 1 to 6, wherein the plurality of cell configurations includes more than one cell configuration associated with one candidate target cell,
optionally wherein the first subset comprises one or more cell configurations but less than all of the plurality of cell configurations,
optionally wherein the cell configurations within the first subset are respectively for different candidate target cells, and
optionally wherein the plurality of cell configurations comprises one subset of cell configurations for each cell configuration within the first subset.

8. The UE according to any one of claims 1 to 7, wherein the receiver, when in operation, receives a cell status indication from the source base station, wherein the cell status indication indicates one or more candidate cells:
• for which the associated cell configuration is activated or deactivated, optionally wherein the cell status indication is carried:
• in a Radio Resource Control, RRC, message, or
• in a control element of a Medium Access Control, MAC, message,
optionally wherein the cell status indication is a bitmap, wherein each bit of a bitmap is associated with one candidate target cell of the plurality of candidate target cells, and one value of the bit indicates to activate the cell configuration of the associated candidate target cell and the other value of the bit indicates to deactivate the cell configuration of the associated candidate target cell.

9. The UE according to any one of claims 1 to 8, wherein the conditional cell mobility procedure is one of:
• a conditional handover, according to which the UE disconnects from the source cell and connects to a candidate target cell upon fulfilling an execution condition, optionally wherein the source cell and the target cell belong to a same master group of cells of the UE,
• a conditional cell change, according to which the UE disconnects from the source cell and connects to a candidate target cell upon fulfilling an execution condition, wherein the source cell and the candidate target cell belong to a secondary group of cells of the UE different from a master group of cells of the UE, and
• a conditional cell addition, according to which the UE connects to a candidate target cell upon fulfilling an execution condition, wherein the candidate target is a primary cell of a secondary group of cells of the UE different from a master group of cells of the UE.

10. The UE according to any one of claims 1 to 9, wherein the UE is configured with a master cell group, MCG, and a plurality of secondary cell groups, SCG, wherein only one of the plurality of SCGs is active at a given time for the UE such that the UE is connected to the one or more cells of the active SCG,
optionally wherein the circuitry, when in operation, determines the active SCG to be the first SCG configured for the UE,
optionally wherein the circuitry, when in operation, determines the active SCG based on an indication received from the source base station.

11. A base station comprising:
circuitry, which in operation, generates a plurality of cell configurations for a plurality of candidate target cells, wherein each cell configuration comprises cell configuration parameters for performing a conditional cell mobility procedure between a user equipment, UE, and said respective candidate target cell and comprises an execution condition as to when to execute the conditional cell mobility procedure with said respective candidate target cell,
wherein the plurality of cell configurations comprises a first subset of cell configurations to be evaluated by the UE when being in connection with the base station, wherein the plurality of cell configurations comprises a second subset of cell configurations to be evaluated by the UE when being in connection with a first candidate target cell of the plurality of candidate target cells, the first candidate target cell being different from a source cell of the base station,
a transmitter, which in operation, transmits the generated plurality of cell configurations to the UE.

12. The base station according to claim 11, wherein the generating of the plurality of cell configurations comprises that:
the transmitter, when in operation, transmits a request to the first candidate target cell for requesting the cell configuration parameters of said first candidate target cell,
a receiver, when in operation, receives, from the first candidate target cell and in response to the request, the cell configuration of at least another candidate target cell, wherein the cell configuration of the other candidate target cell includes the cell configuration parameters of said other candidate target cell to be used by the UE when being in connection with the first candidate target cell, and including the execution condition as to when to execute the conditional cell mobility procedure between the UE, when being in connection with the first candidate target cell, and said other candidate target cell,
optionally wherein the receiver, when in operation, receives, from the first candidate target cell, the requested cell configuration parameters of said first candidate target cell, and the circuitry, when in operation, determines the execution condition for the requested cell configuration parameters of said first candidate target cell as to when to execute the conditional cell mobility procedure between the UE and said first candidate target cell,
optionally wherein the circuitry, when in operation, generates the cell configuration for the first candidate target cell, based on the received cell configuration parameters of said first candidate target cell and the determined execution condition for said first candidate target cell.

13. The base station according to claim 11 or 12, wherein the transmitter, when in operation, transmits a cell status indication to the UE, wherein the cell status indication indicates one or more of:
• candidate cells for which the associated cell configuration is activated,
• candidate cells for which the associated cell configuration is deactivated, optionally wherein the cell status indication is carried:
• in a Radio Resource Control, RRC, message, or
• in a control element of a Medium Access Control, MAC, message,
optionally wherein the cell status indication is a bitmap, wherein each bit of a bitmap is associated with one candidate target cell of the plurality of candidate target cells, and one value of the bit indicates to activate the cell configuration of the associated candidate target cell and the other value of the bit indicates to deactivate the cell configuration of the associated candidate target cell.

14. A base station comprising:
a receiver, which in operation, receives, from a source base station, a request for requesting cell configuration parameters of the base station for performing a conditional cell mobility procedure between a user equipment, UE, connected to the source base station, and the base station,
circuitry, which in operation, in response to receiving the request, generates a cell configuration of at least another candidate target cell, wherein the cell configuration of the other candidate target cell includes the cell configuration parameters of said other candidate target cell to be used by the UE when being in connection with the base station, and includes the execution condition as to when to execute the conditional cell mobility between the UE, when being in connection with the base station, and said other candidate target cell,
a transmitter, which in operation, transmits the generated cell configuration for the at least other candidate target cell to the source base station.

15. The base station according to claim 14, wherein the generating of the cell configuration for the at least other candidate target cell comprises that:
the transmitter, when in operation, transmits a request, to the other candidate target cell, for requesting cell configuration parameters of said other candidate target cell,
a receiver, when in operation, receives, from the other candidate target cell, the requested cell configuration parameters of said other candidate target cell,
the circuitry, when in operation, determines the execution condition as to when to execute the conditional mobility procedure between the UE, when being in connection with the base station, and said other candidate target cell.
